# EUROPÄISCHE PATENTSCHRIFT

(11) **EP 2 431 906 B1**
(45) Veröffentlichungstag und Bekanntmachung des Hinweises auf die Patenterteilung: **11.06.2014**
(21) Anmeldenummer: 11181801.9
(22) Anmeldetag: 19.09.2011
(51) Int. Cl.: G06F 21/62

(54) **Verfahren zur Prüfung von Aktionen mit Daten**
Method for inspecting actions with data
Procédé de vérification d'actions avec des données

(30) Priorität: 20.09.2010 DE 102010037651
(43) Veröffentlichungstag der Anmeldung: 21.03.2012
(73) Patentinhaber: Kobil Systems GmbH, 67547 Worms (DE)
(72) Erfinder: Koyun, Ismet, 67550 Worms (DE)
(74) Vertreter: Cohausz & Florack

(56) Entgegenhaltungen:
- EP-A2- 1 703 432
- EP-A2- 1 901 193
- WO-A1-2009/158305
- WO-A2-2009/095413
- DE-A1-102008 028 703
- US-A1- 2006 150 256
- US-A1- 2007 214 332
- Kirk Waingrow: "Unmounting and Busy Devices" In: "UNIX Hints & Hacks", 20. April 1999 (1999-04-20), Que, XP55018734, ISBN: 978-0-78-971927-0 * Section 2.7.1 *
- Kirk Waingrow: "Administration Tools and Recommended Organizations" In: "UNIX Hints & Hacks", 20. April 1999 (1999-04-20), Que, XP55018735, ISBN: 978-0-78-971927-0 * Section lsof *
- GUSTAV NEUMANN ET AL: "An Approach to Engineer and Enforce Context Constraints in an RBAC Environment", SACMAT '03 PROCEEDINGS OF THE EIGHTH ACM SYMPOSIUM ON ACCESS CONTROL MODELS AND TECHNOLOGIES, 3 June 2003 (2003-06-03), pages 65-79, XP055067217, DOI: 10.1145/775412.775421 ISBN: 1581136811

## Beschreibung

### Gebiet der Erfindung

Die vorliegende Erfindung betrifft ein Verfahren, umfassend das Prüfen, ob eine Aktion mit Daten gegen eine Aktionsrichtlinie verstößt; das Zulassen der Aktion, falls sie nicht gegen die Aktionsrichtlinie verstößt, und das Unterbinden der Aktion, falls sie gegen die Aktionsrichtlinie verstößt, wobei das Verfahren von einem Programmagenten ausgeführt wird, der auf einer Datenverarbeitungsanlage läuft und mit den Daten assoziiert ist.

### Hintergrund der Erfindung

Im Stand der Technik sind Lösungen zur Verhütung von Datenverlusten bekannt (Data Loss Prevention, DLP). Solche DLP-Lösungen verhindern, dass Daten, insbesondere vertrauliche Daten, unberechtigt aus dem von den DLP-Lösungen kontrollierten Bereich, wie einem lokalen vertrauenswürdigen Netzwerk wie einem Firmennetzwerk, entfernt werden, z.B. durch Kopieren auftragbare Datenträgervorrichtungen. Die im Stand der Technik bekannten DLP-Lösungen basieren auf benutzerbasierten Regeln, d.h. abhängig von den Benutzerrechten ist einem Benutzer beispielsweise das Kopieren von Daten auf eine tragbare Datenträgervorrichtung gestattet oder nicht gestattet.

Sobald sich die Daten jedoch außerhalb des von der DLP-Lösung kontrollierten Bereichs befinden, ist eine Kontrolle der Verbreitung der Daten nicht mehr möglich. Vielmehr wird auf die Sorgfalt der Benutzer abgestellt.

Mit der stark gestiegenen Mobilität und dem damit verbundenen erweiterten Kreis von Benutzern wie Außendienstmitarbeitern, die Daten beispielsweise auch außerhalb von lokalen vertrauenswürdigen Netzwerken wie Firmennetzwerken mitführen bzw. auf diese zugreifen müssen, ist diese mangelnde Kontrolle der Verbreitung der Daten zunehmend kritisch zu sehen.

Diese Problematik wird durch die zunehmende Existenz von Ausspähprogrammen (z.B. sogenannte "Trojaner") verschärft, da diese selbst das Ausspähen von verschlüsselten Daten erlauben. Zum Beispiel können Daten, die sich in einer durch Verschlüsselungstechnik gesicherten tragbaren Datenträgervorrichtung (z.B. einem USB-Memory-Stick) befinden, ausgespäht werden, sobald die verschlüsselten Daten der tragbaren Datenträgervorrichtung dem Betriebssystem, z.B. durch die Eingabe eines Entschlüsselungscodes, verfügbar gemacht und als neues Laufwerk in die Laufwerksstruktur eingebunden ("gemountet") worden sind. In diesem Fall kann sowohl der Benutzer als auch ein Ausspähprogramm auf die Daten transparent zugreifen, d.h., ohne dass eine erneute Eingabe des Entschlüsselungscodes notwendig ist; die Daten werden auf Anforderung automatisch ("on-the-fly") entschlüsselt.

Aus der Patentanmeldung US 2007/214332 A1 ist ein Gerätetreiberprogramm mit einer Speichereinheit für ein Verzeichnis, aus dem ein Zugriff erlaubt ist, und einer Zugriffszulassungsentscheidungseinheit bekannt. Die Speichereinheit für das Verzeichnis, aus dem ein Zugriff erlaubt ist, speichert als ein Verzeichnis, aus dem ein Zugriff erlaubt ist, ein Aktivierungsverzeichnis für einen Prozess, der auf einen S-Speicher (privaten Speicher) zugreifen darf. Die Zugriffszulassungsentscheidungseinheit prüft, ob ein Aktivierungsverzeichnis für einen Prozess, der Zugriff auf den S-Speicher angefragt hat, dem Verzeichnis, aus dem ein Zugriff erlaubt ist, entspricht. Basierend auf dem Ergebnis, entscheidet die Zugriffszulassungsentscheidungseinheit, ob die Anfrage zu akzeptieren ist.

Aus der Patentanmeldung WO 2009/095413 ist ein Verfahren und ein System zum Zugriff auf verschlüsselte Dateien bekannt. Das Verfahren enthält die Schritte: Empfangen einer Zugriffsanfrage für einen verschlüsselte Datei; Bestimmen der Anwendung, die die Anfrage macht; Prüfen, ob die Anwendung für den Zugriff autorisiert ist; und, falls die Anwendung autorisiert ist, Zulassen des Zugriffs.

Aus der Patentanmeldung DE 10 2008 028703 A1 ist ein Verfahren zum Verwalten von Daten auf einem portablen Datenträger, auf dem ein Dateisystem eingerichtet ist, bekannt. Das Verfahren umfasst den Schritt des Zugreifens auf ein Verzeichnis des Dateisystems durch einen Nutzer des Datenträgers. Dabei ist dem Verzeichnis zumindest eine kryptographische Operation zugeordnet, so dass beim Zugreifen auf das Verzeichnis eine Ausführung der dem Verzeichnis zugeordneten kryptographischen Operation ausgelöst wird. Hierbei kann der Nutzer bei einem Zugriff auf ein Verzeichnis, welches ein Entschlüsseln von Daten oder ein Signieren von Daten mittels einer kryptographischen Signatur auslöst, zur Authentisierung gegenüber dem Datenträger aufgefordert werden.

Aus der Patentanmeldung EP 1 901 193 A2 ist ein Träger mit codierten, ausführbaren Zugriffkontrollprogrammen, die auf dem Datenträger gespeichert sind, bekannt. Wobei auf die Programme von einem Gerät mit einem Sicherheitsmodul zugegriffen wird, das als eine vertrauenswürdige Plattform bereitgestellt wird. Das Sicherheitsmodul besitzt einen Schlüssel, der mit den Zugriffkontrollprogrammen assoziiert ist. Die Zugriffkontrollprogramme kontrollieren den Zugriff auf zugriffsgeschützte Daten in Abhängigkeit von Zugriffsregeln, die in einer Konfigurationsdatei gespeichert sind, wobei die zugriffsgeschützten Daten in einem zugriffgeschützten Speicherbereich gespeichert sind.

Aus der Patentanmeldung WO2009/158305 A1 und der Veröffentlichung GUSTAV NEUMANN ET AL: "An Approach to Engineer and Enforce Context Constraints in an RBAC Environment" (XP055067217) ist die Berücksichtigung der Umgebung eines Programmagenten bei der Bestimmung einer Aktionsrichtlinie und der Prüfung der Zulässigkeit einer Aktion bekannt.

### Zusammenfassung einiger beispielhafter Ausgestaltungen der vorliegenden Erfindung

Eine Aufgabe der vorliegenden Erfindung ist es deshalb, die oben genannten Nachteile zu überwinden.

Diese Aufgabe wird gelöst durch die unabhängigen Ansprüche. Vorteilhafte beispielhafte Ausgestaltungen der Erfindung sind den abhängigen Patentansprüchen zu entnehmen.

Ein erstes erfindungsgemäßes Verfahren umfasst das Prüfen, ob eine Aktion mit Daten gegen eine Aktionsrichtlinie verstößt; das Zulassen der Aktion, falls sie nicht gegen die Aktionsrichtlinie verstößt, und das Unterbinden der Aktion, falls sie gegen die Aktionsrichtlinie verstößt, wobei das Verfahren von einem Programmagenten ausgeführt wird, der auf einer Datenverarbeitungsanlage läuft und mit den Daten assoziiert ist und der insbesondere nicht mit weiteren Daten auf der Datenverarbeitungsanlage assoziiert ist.

Eine Aktion mit Daten ist beispielsweise eine Aktion, die einen Lese- und/oder Schreibzugriff auf die Daten erfordert. Sie kann jedoch auch jede andere Aktion mit Daten betreffen. Zum Beispiel kann eine Aktion mit Daten auch das Lesen und/oder Verwenden des in einem Hauptspeicher befindlichen Speicherabbildes von Daten sein.

Die Aktion mit den Daten kann beispielsweise durch eine Benutzereingabe und/oder durch ein Computerprogramm, das auf der Datenverarbeitungsanlage läuft, veranlasst sein. Eine Aktion mit Daten ist beispielsweise der kleinste Teil einer Aktionsfolge wie z.B. das Verschieben von Daten, welches sowohl das Kopieren der Daten als auch das Löschen der ursprünglichen Daten umfassen kann. Es ist beispielsweise denkbar, dass eine Aktion einer Aktionsfolge zugelassen und eine andere unterbunden wird.

Computerprogramme laufen insbesondere als Prozesse auf Datenverarbeitungsanlagen. Unter Prozess werden beispielsweise Instanzen eines auf einer Datenverarbeitungsanlage laufenden Computerprogramms verstanden. Ein Prozess umfasst z.B. das Speicherabbild des Programmcodes des Computerprogramms im Hauptspeicher, zusätzlichen Speicherbereich im Hauptspeicher für die Daten und weitere vom Betriebssystem bzw. dessen Kern bereitgestellte Betriebsmittel. Es kann beispielsweise meh-rere Prozesse eines Computerprogramms geben, die je nach Anwendung auch gleichzeitig oder nebeneinander ablaufen.

Das Betriebsystem einer Datenverarbeitungsanlage kann beispielsweise ein Windows-, UNIX-, Linux- , DOS- oder MAC-Betriebssystem sein. Ein Betriebssystem ist ein Computerprogramm, das die Verwendung einer Datenverarbeitungsanlage ermöglicht. Es verwaltet beispielsweise Betriebsmittel wie Speicher, Ein- und Ausgabegeräte, stellt grundlegende Funktionen zur Verfügung und steuert die Ausführung von Programmen.

Der Kern eines Betriebssystems bildet die unterste Softwareschicht einer Datenverarbeitungsanlage und hat direkten Zugriff auf die Hardware. Er stellt den darüber liegenden Anwendungen beispielsweise folgende Funktionen zur Verfügung: Schnittstellen zur Hardware (z.B. Ein-/Ausgabegeräte), Speicherverwaltung (z.B. physikalischer und virtueller Hauptspeicher), Prozessverwaltung, Geräteverwaltung und/oder Datenorganisation und -verwaltung (z.B. Dateisysteme, Laufwerkstruktur). Nicht zum Kern des Betriebssystems kann beispielsweise eine graphische Benutzeroberfläche gehören.

Die Aktionsrichtlinie regelt beispielsweise, ob eine Aktion mit Daten erlaubt ist, d.h. zugelassen wird, oder ob sie verboten ist, d.h. unterbunden wird. Zum Beispiel kann eine Aktionsrichtlinie in Form einer Matrix ausgebildet sein, wobei die Matrix jeder Aktion mit Daten eine entsprechende Regelung zuordnet.

Zulassen der Aktion mit Daten heißt beispielsweise, dass die Aktion mit den Daten ausgeführt wird; und Unterbinden der Aktion mit den Daten heißt beispielsweise, dass die Ausführung der Aktion mit den Daten verhindert wird.

Zum Beispiel können Programmanweisungen, wie z.B. Funktionsaufrufe, die Datenverarbeitungsanlage zur Ausführung der Aktion mit den Daten veranlassen. Erfindungsgemäß können diese Programmanweisungen beispielsweise abgefangen und/oder unterbrochen und (anschließend) geprüft werden. Falls die Prüfung dieser Programmanweisungen keinen Verstoß gegen eine Aktionsrichtlinie ergibt, werden sie beispielsweise ausgeführt und/oder fortgeführt. Verstoßen sie aber gegen eine Aktionsrichtlinie, werden sie beispielsweise verhindert und/oder abgebrochen und dem Benutzer wird angezeigt, dass diese Aktion gegen eine Aktionsrichtlinie verstößt.

Ein Agent ist beispielsweise ein Computerprogramm, das als Prozess im Hintergrund abläuft und zu einem gewissen eigenständigen Verhalten fähig ist, d.h. unbemerkt und ohne Zutun des Benutzers Entscheidungen fällen kann. Der Programmagent kann beispielsweise Programmanweisungen, die den Ablauf des Verfahrens steuern, enthalten und für die eigentliche Ausführung des Verfahrens zumindest teilweise auf Funktionen, die vom Betriebssystem und/oder Programmierschnittstellen der Datenverarbeitungsanlage zur Verfügung gestellt werden, zurückgreifen. Zum Beispiel kann die Aktion mit den Daten mit Hilfe von Funktionen, die eine Programmierschnittstelle des Betriebsystems zur Verfügung stellt, ausgeführt werden. Des Weiteren ist denkbar, dass das Verfahren nicht nur durch den Programmagenten ausgeführt wird, sondern dass weitere Agenten und/oder Computerprogramme bei der Ausführung des Verfahrens mitwirken.

Die mit dem Programmagenten assoziierten Daten sind beispielsweise zusammen mit dem Programmagenten auf einem elektronischen Gerät gespeichert, wobei die Daten auf dem elektronischen Gerät dann zwingend (durch den gemeinsamen Speicherort) mit dem Programmagenten assoziiert sind. Das elektronische Gerät ist beispielsweise eine Datenträgervorrichtung, insbesondere eine erfindungsgemäße Datenträgervorrichtung. Das elektronische Gerät ist vorzugsweise als Speichergerät, das über eine universelle serielle Busschnittstelle (Universal Serial Bus, USB) verfügt, insbesondere als USB-Memory-Stick oder Mobiltelefon, etc., ausgebildet. Zum Beispiel kann der Programmagent alle Aktionen mit Daten, die auf dem elektronischen Gerät gespeichert und deshalb mit dem Programmagenten assoziiert sind, prüfen.

Daten sollen insbesondere als mit dem Programmagenten assoziiert verstanden werden, wenn dieser eingerichtet ist, zu prüfen, ob eine Aktion mit diesen Daten gegen eine Aktionsrichtlinie verstößt.

Es ist jedoch auch denkbar, dass die Daten auf andere Art und Weise mit dem Programmagenten assoziiert werden. Zum Beispiel können Daten, die mit dem Programmagenten assoziiert sind, zuvor beim Programmagenten registriert worden sein, oder die mit dem Programmagenten assoziierten Daten sind nur mit dessen Hilfe zu entschlüsseln und deshalb mit dem Programmagenten assoziiert.

Die mit dem Programmagenten assoziierten Daten sind beispielsweise vertrauliche Daten, wobei weitere Daten, die nicht vertraulich sind, z.B. nicht mit dem Programmagenten assoziiert sein können.

Die Datenverarbeitungsanlage ist beispielsweise eine beliebige Datenverarbeitungsanlage innerhalb oder außerhalb eines lokalen vertrauenswürdigen Netzwerks wie einem Firmennetzwerk, insbesondere eine Gast-Datenverarbeitungsanlage. Eine Datenverarbeitungsanlage ist eine Vorrichtung, die zur Verarbeitung von Daten, insbesondere mit Hilfe von Computerprogrammen, eingerichtet ist, z.B. ein Computer, ein Thin-Client, ein Server und/oder ein tragbarer Computer wie ein Mobiltelefon, ein Laptop und/oder ein persönlicher digitaler Assistent (PDA).

Das erfindungsgemäße erste Verfahren ermöglicht es, Aktionen mit Daten zu prüfen und gegebenenfalls zu verhindern, falls diese Aktionen beispielsweise zu einer ungewünschten Verbreitung der Daten führen oder führen könnten.

Ein zweites Verfahren umfasst das Übertragen von Daten von einer Datenverarbeitungsanlage (z.B. auf ein mit der Datenverarbeitungsanlage trennbar verbundenes elektronisches Gerät, z.B. auf einen USB-Memory-Stick oder ein Mobiltelefon, etc.) nur dann, falls die übertragenen Daten zwingend mit einem Programmagenten assoziiert werden, wobei der Programmagent das vorhergehende erste erfindungsgemäße Verfahren ausführt, wenn er auf einer Datenverarbeitungsanlage läuft.

Die Datenverarbeitungsanlage ist beispielsweise eine Datenverarbeitungsanlage innerhalb eines lokalen vertrauenswürdigen Netzwerks wie einem Firmennetzwerk, insbesondere eine Heimat-Datenverarbeitungsanlage.

Es ist beispielsweise denkbar, dass Programmanweisungen wie Funktionsaufrufe zum Übertragen von Daten von der Datenverarbeitungsanlage auf ein elektronisches Gerät abgefangen und geprüft werden. Falls die Daten auf dem elektronischen Gerät beispielsweise zwingend mit dem Programmagenten assoziiert werden, wird das Übertragen zugelassen. Andernfalls wird das Übertragen unterbunden.

Alternativ ist denkbar, dass eine Assoziierung der Daten mit dem Programmagenten veranlasst wird (z.B. durch eine Registrierung) und nur falls dies nicht möglicht ist, wird das Übertragen (z.B. Daten-Kopieren) unterbunden. Unter Übertragen kann beispielweise auch das Kopieren der Daten in einen Speicherbereich (z.B. in eine ausführbare Archiv-Datei) verstanden werden, der bei einer Emulation eines elektronischen Geräts durch eine Datenverarbeitungsanlage als virtuelles Laufwerk in die Laufwerkstruktur der (emulierenden) Datenverarbeitungsanlage eingebunden wird.

Durch das zweite Verfahren wird insbesondere verhindert, dass Daten aus einem lokalen vertrauenswürdigen Netzwerk entnommen werden können, ohne dass ein Schutz durch das erfindungsgemäße Verfahren sichergestellt ist. Übertragen bedeutet unter anderem Kopieren, Bewegen oder Entnehmen

Das elektronische Gerät ist, wie oben erläutert, beispielsweise eine Datenträgervorrichtung, insbesondere eine erfindungsgemäße Datenträgervorrichtung.

Unter trennbar verbindbar soll beispielsweise verstanden werden, dass das elektronische Gerät mit einer Datenschnittstelle der Datenverarbeitungsanlage verbunden ist und von dieser ausgelesen und/oder beschrieben werden kann. Die Verbindung kann dabei sowohl logisch als auch physikalisch (mechanisch) sein. Es ist beispielsweise eine drahtgebundene Verbindung denkbar, z.B. über eine serielle-Datenschnittstelle (z.B. eine USB-, Firewire-, RS-232-Schnittstelle, etc.) oder eine parallele-Datenschnittstelle (z.B. eine Small Computer System Interface SCSI-, IEEE-1284-Schnittstelle, etc.). Die drahtgebundene Verbindung kann mechanisch, z.B. durch Einstecken, erfolgen und ist insbesondere reversibel. Andererseits ist auch eine drahtlose Verbindung denkbar, z.B. über eine Funk-Datenschnittstelle (z.B. eine Wireless Local Area Network WLAN-, Bluetooth-Schnittstelle, etc.) oder eine Infrarot-Datenschnittstelle (z.B. eine Infrared Data Association IrDA-Schnittstelle, etc.). In diesem Fall ist keine mechanische Verbindung zwischen dem elektronischen Gerät und der Datenverarbeitungsanlage notwendig.

Das erfindungsgemäße Computerprogramm umfasst Programmanweisungen, wobei die Programmanweisungen einen Prozessor zur Ausführung des erfindungsgemäßen Verfahrens veranlassen, wenn das Computerprogramm durch den Prozessor ausgeführt wird. Dabei kann der Prozessor beispielsweise Teil der Datenverarbeitungsanlage sein, auf der das entsprechende Verfahren ausgeführt wird.

Das erfindungsgemäße Computerprogramm kann beispielsweise als Agent ausgebildet sein. Zum Beispiel kann das erfindungsgemäße Computerprogramm, das Programmanweisungen zur Ausführung des ersten erfindungsgemäßen Verfahrens umfasst, der Programmagent sein. Ein Computerprogramm, das einen Prozessor veranlasst, das zweite Verfahren auszuführen, kann z.B. als lokaler Programmagent ausgebildet sein, welcher vorzugsweise dauerhaft auf einer Datenverarbeitungsanlage läuft. Es muss folglich zwischen dem Programmagenten und dem lokalen Programmagenten unterschieden werden. Das Computerprogramm wird beispielsweise beim Starten der Datenverarbeitungsanlage geladen und läuft dann beispielsweise ohne Unterbrechung darauf.

Das erfindungsgemäße Computerprogramm kann zumindest teilweise als dynamische Bibliothek (Dynamic Link Library, DLL) ausgebildet sein.

Ein Computerprogramm ist beispielsweise über ein Netzwerk wie das Internet, ein Telefon- oder Mobilfunknetz und/oder ein lokales Netzwerk verteilbar. Ein Computerprogramm kann zumindest teilweise Software und/oder Firmware eines Prozessors sein.

Die erfindungsgemäße Datenträgervorrichtung kann beispielsweise ein computerlesbares Speichermedium sein, welches ein erfindungsgemäßes Computerprogramm enthält und z.B. als magnetisches, elektrisches, elektro-magnetisches, optisches und/oder andersartiges Speichermedium ausgebildet ist.

Eine solche Datenträgervorrichtung ist beispielsweise tragbar oder in einer Vorrichtung fest installiert. Beispiele für eine solche Datenträgervorrichtung sind nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll insbesondere so verstanden werden, dass das Speichermedium von einem Computer bzw. einer Datenverarbeitungsanlage (aus)gelesen und/oder beschrieben werden kann, beispielsweise von einem Prozessor.

Datenverarbeitungsanlagen (z.B. die Gast- und die Heimat-Datenverarbeitungsanlage) umfassen Mittel zur Ausführung zumindest eines von dem erfindungsgemäßen ersten Verfahren und dem zweiten Verfahren, wobei die Datenverarbeitungsanlagen softwaremäßig eingerichtet sind, um das Verfahren ausführen zu können.

Unter softwaremäßig eingerichtet soll dabei insbesondere die Vorbereitung der Datenverarbeitungsanlage verstanden werden, die notwendig ist, um ein Verfahren beispielsweise in Form eines Computerprogramms ausführen zu können. Diese Vorbereitung wird häufig als Installation bezeichnet.

Ein Treiber ist ein Computerprogramm, das insbesondere dem Betriebssystem Funktionen zur Steuerung einer Hardwarekomponente zur Verfügung stellt. Installierte Treiber werden beispielsweise beim Starten der Datenverarbeitungsanlage zusammen mit dem Betriebssystem geladen und sind beispielsweise Teil des Kerns des Betriebssystems, der als Prozess auf der Datenverarbeitungsanlage läuft.

Zum Beispiel macht ein Treiber einer Datenträgervorrichtung dem Betriebssystem Daten, die in dem Speicher der Datenträgervorrichtung gespeichert sind, nach seiner Installation verfügbar, so dass das Betriebssystem den Speicher der Datenträgervorrichtung beispielsweise als neues Laufwerk in die Laufwerkstruktur der Datenverarbeitungsanlage einbinden ("mounten") kann, sobald die Datenträgervorrichtung mit der Datenverarbeitungsanlage verbunden wird.

Sowohl auf der Gast- als auch auf der Heimat-Datenverarbeitungsanlage kann beispielsweise ein Treiber für die erfindungsgemäße Datenträgervorrichtung installiert sein, der die darauf enthaltenen Daten dem Betriebssystem verfügbar macht. Des Weiteren ist denkbar, dass auf einigen oder allen Datenverarbeitungsanlagen innerhalb des lokalen vertrauenswürdigen Netzwerks (den Heimat-Datenverarbeitungsanlagen) der lokale Programmagent installiert ist. Der lokale Programmagent wird beispielsweise beim Starten der Datenverarbeitungsanlagen geladen und läuft ohne Unterbrechung darauf.

Es ist denkbar, dass das erfindungsgemäße Computerprogramm durch Mittel der erfindungsgemäßen Datenverarbeitungsanlage, z.B. einem Prozessor, ausgeführt wird. Unter Prozessor sollen unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASIC) oder Field Programmable Gate Arrays (FPGA) verstanden werden.

Die Datenverarbeitungsanlagen umfassen des Weiteren Mittel zur Verbindung mit der erfindungsgemäßen Datenträgervorrichtung. Diese Mittel können z.B. eine zur Datenschnittstelle der Datenträgervorrichtung korrespondierende Datenschnittstelle sein.

Ein System umfasst eine erfindungsgemäße Datenträgervorrichtung und eine Datenverarbeitungsanlage, die mit der Datenträgervorrichtung trennbar verbindbar ist. Durch ein solches System können Aktionen mit Daten auch außerhalb eines lokalen vertrauenswürdigen Netzwerks wie einem Firmennetzwerk geprüft und ggfs. verhindert werden, um beispielsweise eine ungewünschte Ausbreitung und/oder Benutzung der Daten zu vermeiden.

Im Folgenden werden beispielhafte Ausgestaltungen der vorliegenden Erfindung beschrieben, welche auf weitere beispielhafte Merkmale des erfindungsgemäßen Verfahrens, des erfindungsgemäßen Computerprogramms, der Datenverarbeitungsanlagen sowie der erfindungsgemäßen Datenträgervorrichtung und des Systems abstellen. Insbesondere sollen durch die Beschreibung eines zusätzlichen Verfahrenschritts eines der Verfahren auch als offenbart gelten Mittel zur Durchführung des Verfahrenschritts der entsprechenden Datenverarbeitungsanlage bzw. der Datenträgervorrichtung und eine entsprechende Programmanweisung des entsprechenden Computerprogramms, die einen Prozessor zur Ausführung des Verfahrensschritts veranlasst, wenn das Computerprogramm durch den Prozessor ausgeführt wird. Das Gleiche soll auch für die Offenbarung eines Mittels zur Durchführung eines Verfahrensschritts oder einer Programmanweisung gelten, z.B. soll die Offenbarung eines Mittels zur Durchführung eines Verfahrensschritts auch als Offenbarung des entsprechenden Verfahrensschritts und einer entsprechenden Programmanweisung verstanden werden.

In beispielhaften Ausgestaltungen der Erfindung geht die Aktion mit den Daten von einem oder mehreren Programmen aus, die auf der Datenverarbeitungsanlage laufen. Dass heißt, es handelt sich um eine Aktion mit Daten, die von einer Instanz der Datenverarbeitungsanlage ausgeht. Diese Aktion kann z.B. veranlasst sein durch einen Benutzer der Datenverarbeitungsanlage und/oder ein Computerprogramm wie ein Ausspähprogramm, das auf der Datenverarbeitungsanlage läuft. Im Gegensatz zu einer Firewall bzw. einem Firewall-Programm werden erfindungsgemäß beispielsweise auch interne Zugriffsversuche auf die mit dem Programmagenten assoziierten Daten geprüft und gegebenenfalls unterbunden.

In beispielhaften Ausgestaltungen der Erfindung ist die Aktion mit den Daten ausgebildet als Programm-, Prozedur- und/oder Schnittstellenaufruf, dem als Argument mit dem Programmagenten assoziierte Daten übergeben werden, und/oder als Zugriffsversuch auf mit dem Programmagenten assoziierte Daten.

Dabei versteht man unter einer Prozedur beispielsweise zusammenhängende Programmanweisungen, die es erlauben, eine bestimmte Aufgabe wiederholbar umzusetzen. Eine Prozedur ist beispielsweise eine Funktion, ein Unterprogramm, eine Methode und/oder eine Subroutine.

Schnittstellenaufrufe sind beispielsweise Aufrufe einer Funktion einer Programmierschnittstelle, die z.B. durch das Betriebssystem der Datenverarbeitungsanlage bzw. dessen Kern zur Verfügung gestellt werden. Zum Beispiel können Windows-, UNIX-, Linux-, DOS- oder MAC-Betriebsysteme solche Programmierschnittstellen zur Verfügung stellen.

Schnittstellen und/oder Programmierschnittstellen sind beispielsweise als Treiber und/oder als dynamische Bibliotheken ausgebildet. In einem Windows-Betriebssystem zählen dazu z.B. die Windows-Anwendungs-Programmierschnittstelle (Windows Application Programming Interface, WINAPI) und die Windows-Sockel-Programmierschnittstelle (Windows Socket Application Programming Interface, Winsock-API). In einem Linux-Betriebssystem ist eine solche Programmierschnittstelle beispielsweise die sogenannte Linux-Kernel-Programmierschnittstelle (Linux-Kernel API). In einem MAC-Betriebssystem gibt es beispielsweise die Cocoa-, Carbon- und POSIX-Programmierschnittstelle. Eine Prozedur und/oder eine Funktion einer Programmierschnittstelle kann beispielsweise von einem Programm, das auf der Datenverarbeitungsanlage läuft, aufgerufen werden.

Es ist beispielsweise denkbar, dass der Programmagent, sobald er geladen ist und auf der Datenverarbeitungsanlage läuft, der (internen) Kommunikation der Datenverarbeitung zwischengeschaltet ist beispielsweise derart, dass er die (interne) Kommunikation der Datenverarbeitungsanlage bzw. Teile der (internen) Kommunikation der Datenverarbeitungsanlage auf sich umleitet und z.B. erst nach einer positiven Prüfung weiterleitet. Zum Beispiel hängt sich der Programmagent vorgelagert oder nachgelagert in die Kommunikation zwischen Prozessen und entscheidet, ob diese Übertragung bzw. der Prozess (bzw. die Funktion), der die Daten erhalten soll, ausgeführt wird.

Die interne Kommunikation einer Datenverarbeitungsanlage kann zum Beispiel die Kommunikation zwischen Prozessen, die auf der Datenverarbeitungsanlage laufen, mit anderen Prozessen, Programmen und/oder dem Betriebssystem der Datenverarbeitungsanlage betreffen; dazu zählen beispielsweise Programm-, Prozedur- und/oder Schnittstellenaufrufe. Die interne Kommunikation einer Datenverarbeitungsanlage kann aber zum Beispiel auch die Kommunikation zwischen verschiedenen physikalischen Einheiten der Datenverarbeitungsanlage betreffen, wie Hauptspeicher, Programmspeicher, Prozessor und/oder Datenschnittstelle, etc.

Zum Beispiel werden allgemeine Programm-, Prozedur- und/oder Schnittstellenaufrufe auf den Programmagenten umgeleitet. Diese Umleitung kann beispielsweise mittels "API-Hooking" erfolgen. Wenn eine Aktion mit Daten einen Aufruf einer solchen umgeleiteten Funktion einer Programmierschnittstelle darstellt, kann der Programmagent die Aktion mit den Daten prüfen.

Es ist beispielsweise denkbar, dass das Betriebssystem eine Systemaufruf-Tabelle (System Call Table) besitzt, in der Aufrufe von Funktionen einer Programmierschnittstelle mit der entsprechenden Funktion des Betriebssystems verknüpft werden. Wird eine solche Verknüpfung geändert, so dass sie auf den Programmagenten statt auf die entsprechende Funktion des Betriebssystems verweist, dann wird ein entsprechender Aufruf an den Programmagenten umgeleitet. Grundsätzlich ist "API Hooking" in allen Betriebssystemen die Programmierschnittstellen zur Verfügung stellen denkbar. Dies können beispielsweise Windows-, UNIX-, Linux-, DOS- oder MAC-Betriebsysteme sein.

Die Übergabe von mit dem Programmagenten assoziierten Daten als Argument erfolgt beispielsweise mittels eines Referenzparameters (z.B. eines Zeigers auf die Daten oder eines Pfads) und/oder eines Wertparameters (z.B. den Daten selbst).

In beispielhaften Ausgestaltungen der Erfindung ist der Programm agent auf einem elektronischen Gerät gespeichert, das mit der Datenverarbeitungsanlage trennbar verbindbar ist. Das elektronische Gerät ist beispielsweise eine Datenträgervorrichtung, insbesondere eine erfindungsgemäße Datenträgervorrichtung.

Wie oben erläutert, soll unter trennbar verbindbar insbesondere verstanden werden, dass das elektronische Gerät mit einer Datenschnittstelle der Datenverarbeitungsanlage verbunden und von dieser anschließend ausgelesen werden kann. Das elektronische Gerät ist vorzugsweise als USB-Speichergerät, insbesondere als USB-Memory-Stick, ausgebildet.

Gemäß der Erfindung ist der Programmagent unmittelbar aus dem elektronischen Gerät auf der Datenverarbeitungsanlage ausführbar.

Zum Beispiel kann der Programmagent unmittelbar (d.h. direkt) aus einem Speicher des elektronischen Geräts in einen Hauptspeicher eines Prozessors der Datenverarbeitungsanlage geladen werden, um von diesem ausgeführt zu werden. Dadurch hinterlässt der Programmagent, obwohl er auf der Datenverarbeitungsanlage läuft, keine bleibenden Spuren darauf, was es Angreifern erschwert, den Programmagenten zu analysieren und/oder zu manipulieren. Außerdem ist denkbar, dass der Programmagent sicherstellt, dass er nach seiner Beendigung nicht auf der Datenverarbeitungsanlage verbleibt, indem er z.B. die entsprechenden Bereiche im virtuellen und/oder physikalischen Hauptspeicher der Datenverarbeitungsanlage löscht bzw. löschen lässt.

Verbleibt der Programmagent nicht auf der Datenverarbeitungsanlage, wird er auch bei jeder erneuten Verbindung des elektronischen Geräts mit der Datenverarbeitungsanlage unmittelbar aus dem elektronischen Gerät auf der Datenverarbeitungsanlage ausgeführt. Dass heißt zum Beispiel, dass der Programmagent jedesmal unmittelbar aus dem elektronischen Gerät auf der Datenverarbeitungsanlage ausgeführt werden muss.

Es ist beispielsweise denkbar, dass der Programmagent in den Hauptspeicher des Prozessors geladen wird, bevor eine Aktion mit den Daten ausführbar ist, insbesondere sobald das elektronische Gerät mit der Datenverarbeitungsanlage verbunden ist. Dadurch wird verhindert, dass eine Aktion mit den Daten ausgeführt wird, bevor der Programmagent diese auf einen Verstoß gegen eine Verwendungsrichtlinie prüfen kann.

Gemäß der Erfindung sind die mit dem Programmagenten assoziierten Daten zumindest zeitweise in dem elektronischen Gerät gespeichert. Gemäß dem zweiten Verfahren werden die Daten auf das elektronische Gerät übertragen, das mit der Datenverarbeitungsanlage trennbar verbunden ist und auf welchem z.B. auch der Programmagent gespeichert ist.

Das elektronische Gerät kamt beispielsweise zwei Speicher umfassen, wobei der erste Speicher den Programmagenten und der zweite Speicher die mit dem Programmagenten assoziierten Daten enthält. Dies ist insbesondere vorteilhaft, wenn bei der Verbindung mit der Datenverarbeitungsanlage zunächst nur der erste Speicher, der den Programmagenten enthält, dem Betriebssystem verfügbar gemacht wird.

Die Speicher können beispielsweise verschiedenartig ausgebildet sein. Insbesondere könnte der erste Speicher, der den Programmagenten enthält, als Nur-Lese-Speicher ausgebildet sein, um eine Manipulation des Programmagenten zu verhindern. Wohingegen der zweite Speicher beispielsweise als nichtflüchtiger Schreib-Lese-Speicher ausgebildet ist.

Es ist beispielsweise denkbar, dass beide Speicher nur virtuelle Speicher sind und zum selben physikalischen Speicher gehören, der jedoch in mehrere Speicherbereiche (z.B. Partitionen) unterteilt ist, wobei jeder Speicherbereich beispielsweise einem der virtuellen Speicher entspricht.

Es sind auch beispielhafte Ausgestaltungen denkbar, in denen das elektronische Gerät über mehr als zwei Speicher verfügt. Zum Beispiel können ein oder mehrere weitere Speicher als Pufferspeicher zur Ver- und/oder Entschlüsselung und/oder zum Empfang und/oder Senden von Daten dienen.

In beispielhaften Ausgestaltungen der Erfindung sind die mit dem Programmagenten assoziierten Daten in dem elektronischen Gerät verschlüsselt gespeichert. Die Entschlüsselung der mit dem Programmagenten assoziierten Daten kann beispielsweise nur mit Hilfe eines Entschlüsselungscodes möglich sein. Der Entschlüsselungscode kann beispielsweise auf einer Smartcard gespeichert sein und/oder durch den Benutzer eingegeben werden. Aus dem Entschlüsselungscode kann beispielsweise der Schlüssel zur Entschlüsselung der Daten generiert werden.

Außerdem kann der Schlüssel beispielsweise zumindest teilweise aus biometrischen Informationen (z.B. Fingerabdruck und/oder Irisabdruck) eines Benutzers generiert werden.

Durch die Verschlüsselung wird verhindert, dass eine Person Zugriff auf die Daten erhält, wenn sie in Besitz des elektronischen Geräts, auf dem sich die Daten befinden, und/oder in Besitz einer Kopie der Daten, nicht jedoch in Besitz des Entschlüsselungscodes ist.

Es ist weiterhin denkbar, dass der Entschlüsselungscode mit einer Eigenschaft des elektronischen Geräts wie z.B. einer Seriennummer, einer MAC-Adresse und/oder einer Pfadbezeichnung kombiniert werden muss, z.B. mittels einer XOR-Verknüpfung, um den Schlüssel zur Entschlüsselung zu generieren. Dadurch ist die Entschlüsselung der Daten nur in Verbindung mit dem elektronischen Gerät möglich. Eine Kopie der Daten lässt sich nicht entschlüsseln, selbst wenn man in Kenntnis des Entschlüsselungscodes ist. Eine solche Verschlüsselung wird auch lokale Verschlüsselung genannt.

Es ist beispielsweise denkbar, dass für die Entschlüsselung der Daten die Ausführung eines bestimmten Entschlüsselungsprogramms notwendig ist. Ein solches Computerprogramm könnte beispielsweise sicherstellen, dass der Programmagent geladen ist und auf der Datenverarbeitungsanlage läuft, bevor die Daten entschlüsselt werden.

Das Entschlüsselungsprogramm ist beispielsweise auf dem elektronischen Gerät gespeichert und unmittelbar aus diesem auf der Datenverarbeitungsanlage ausführbar. Es ist beispielsweise ein Teil des Programmagenten und/oder es ist als separater Entschlüsselungsagent ausgebildet. Alternativ ist das Entschlüsselungsprogramm beispielsweise als Treiber für das elektronische Gerät, der auf der Datenverarbeitungsanlage zu installieren ist, ausgebildet.

Das Entschlüsselungsprogramm und/oder der Programmagent sind beispielsweise in einem ersten nicht verschlüsselten Speicher des elektronischen Geräts enthalten, wohingegen die mit dem Programmagenten assoziierten Daten in einem zweiten verschlüsselten Speicher des elektronischen Geräts enthalten sind.

Zum Beispiel können verschlüsselte Daten durch die Generierung des Schlüssels und die Ausführung des Entschlüsselungsprogramms dem Betriebssystem derart zur Verfügung gestellt werden, dass ein transparenter Zugriff auf die Daten möglich ist, d.h. die Daten werden auf Anforderung automatisch ("on-the-fly") durch das Entschlüsselungsprogramm entschlüsselt und eine erneute Eingabe des Entschlüsselungscodes ist nicht notwendig. In diesem Fall ist beim Zugriff auf die Daten kein Unterschied zu unverschlüsselten Daten feststellbar, sobald der richtige Entschlüsselungscode eingegeben worden ist. Alternativ kann beispielsweise das Entschlüsselungsprogramm vor jeder Entschlüsselung von verschlüsselten Daten erneut die Eingabe eines Entschlüsselungscodes, der z.B. für jeden Datensatz (z.B. jede Datei) unterschiedlich ist, erforderlich machen.

Außerdem ist die Entschlüsselung beispielsweise abhängig von der Prüfung der Aktion mit den Daten, wobei die Daten sowohl die zu entschlüsselnden Daten sind als auch mit dem Programmagenten assoziiert sind.

Die entschlüsselten Daten werden beispielsweise in einem Pufferspeicher des elektronischen Geräts zwischengespeichert und/oder mit dem Programmagenten assoziiert, um zu verhindern, dass diese auf der Datenverarbeitungsanlage verbleiben und/oder von Programmen wie z.B. Ausspähprogrammen, die auf der Datenverarbeitungsanlage laufen, ausgespäht werden können.

In diesem Zusammenhang ist insbesondere auch denkbar, dass ein Auslagern der entschlüsselten Dateien aus dem physikalischen Hauptspeicher der Datenverarbeitungsanlage in einen virtuellen Hauptspeicher (z.B. eine Auslagerungsdatei), sog. "swappen", verhindert wird und/oder die entschlüsselten Dateien dort vor Beendigung des Programmagenten gelöscht werden.

In beispielhaften Ausgestaltungen der Erfindung werden die mit dem Programmagenten assoziierten Daten nur dann entschlüsselt, falls die Aktion gegen keine Aktionsrichtlinie verstößt. Dabei können die mit dem Programmagenten assoziierten Daten beispielsweise solange verschlüsselt sein, wie sie nicht verwendet werden. Dies ermöglicht, die Daten erst zu entschlüsseln, wenn tatsächlich Aktionen mit ihnen ausgeführt werden. Somit kann ein auf der Datenverarbeitungsanlage laufendes Ausspähprogramm, wenn überhaupt, nur die Daten ausspähen, mit denen Aktionen ausgeführt werden. Alle anderen Daten bleiben verschlüsselt. Die entschlüsselten Daten werden beispielsweise auch mit dem Programmagenten assoziiert.

In beispielhaften Ausgestaltungen der Erfindung sind die mit dem Programmagenten assoziierten Daten über eine drahtlose Schnittstelle des elektronischen Geräts in einen Speicher des elektronischen Geräts und/oder der Datenverarbeitungsanlage ladbar. Eine drahtlose Schnittstelle ist beispielsweise eine Funk-Datenschnittstelle (z.B. Wireless Local Area Network WLAN, Bluetooth) und/oder eine Infrarot-Datenschnittstelle (z.B. IrDA), etc.

Zum Beispiel kann das elektronische Gerät Mittel zur Funkkommunikation, insbesondere zur Mobilfunkkommunikation (vorzugsweise über einen Standard des 3rd Generation Partnership Project wie der Global System for Mobile Communications GSM-, General Packet Radio Service GPRS-, und/oder High Speed Downlink Packet Access HSDPA-Standard bzw. eine Weiterentwicklung davon), aufweisen, um z.B. Daten, die auf einem Server gespeichert sind, in einen eigenen Speicher (z.B. einen Pufferspeicher) und/oder einen Speicher der Datenverarbeitungsanlage zu laden. Diese Daten werden beispielsweise mit dem Programmagenten assoziiert, sobald sie in den eigenen Speicher und/oder den Speicher der Datenverarbeitungsanlage geladen werden.

Dadurch wird der mobile Zugriff auf Daten, beispielsweise vertrauliche Daten, die innerhalb eines lokalen vertrauenswürdigen Netzwerks gespeichert sind (z.B. auf einem Server), von außen ermöglicht, ohne dass die Kontrolle über die Benutzung und/oder Verbreitung der Daten verloren geht.

Des Weiteren kann beispielsweise die Art und Weise der drahtlosen Schnittstelle, über welche die mit dem Programmagenten assoziierten Daten in einen Speicher des elektronischen Geräts und/oder der Datenverarbeitungsanlage geladen werden können, durch die Aktionsrichtlinie bestimmt werden. Dadurch kann beispielsweise außerhalb eines nicht vertrauenswürdigen lokalen Netzwerks, die alleinige Verwendung einer (sicheren) verschlüsselten Funkübertragung (z.B. Wifi Protected Access, WPA oder WPA2 und/oder UMTS aber unter Umständen kein GSM oder Wired Equivalent Privacy, WEP;) sichergestellt werden.

In beispielhaften Ausgestaltungen der Erfindung weist das elektronische Gerät Mittel zur Verschlüsselung und/oder zur Entschlüsselung der mit dem Programmagenten assoziierten Daten auf. Dass heißt, dass die mit dem Programmagenten assoziierten Daten innerhalb des elektronischen Geräts beispielsweise mittels einer Kryptographieeinheit ver- und/oder entschlüsselt werden können. Dadurch findet beispielsweise die gesamte Entschlüsselung der Daten innerhalb des elektronischen Geräts statt, so dass eine Manipulation bzw. ein Ausspähen der Ver- und/oder Entschlüsselung ausgeschlossen ist.

Zwar kann weiterhin die Ausführung eines Entschlüsselungsprogramms durch einen Prozessor der Datenverarbeitungsanlage und die Eingabe eines Entschlüsselungscodes notwendig sein. Dadurch wird aber beispielsweise nur der eigentliche Schlüssel zur Entschlüsselung der Daten, der in der Kryptographieeinheit gespeichert ist, freigeschaltet (statt generiert), so dass der Entschlüsselungscode keinen Rückschluss auf den Schlüssel erlaubt. Alternativ kann das elektronische Gerät selbst Mittel zur Eingabe des Entschlüsselungscodes aufweisen, z.B. eine Tastatur, einen Nummernblock, einen Fingerabdruck- und/oder Iris-Scanner.

In beispielhaften Ausgestaltungen der Erfindung weist das elektronische Gerät eine USB-Schnittstelle zur Verbindung mit der Datenverarbeitungsanlage auf.

In beispielhaften Ausgestaltungen der Erfindung ist der Programmagent auf der Datenverarbeitungsanlage installationslos (also beispielsweise ohne eine zuvor auf der Datenverarbeitungsanlage erfolgte Installation von Software) ausführbar.

Installationslos kann beispielsweise bedeuten, dass die Datenverarbeitungsanlage keine besondere softwaremäßige Einrichtung benötigt, um das Verfahren beispielsweise in Form eines Computerprogramms ausführen zu können.

Zum Beispiel könnte der Programmagent dem Betriebssystem der Datenverarbeitungsanlage durch einen standardmäßig vom Betriebssystem vorgehaltenen Treiber verfügbar gemacht werden. Aber dies muss nicht der Fall sein, es sind auch Ausführungsformen ohne einen solchen Standard-Treiber denkbar, in denen der Programmagent ebenfalls installationslos auf der Datenverarbeitungsanlage ausführbar ist.

Dies ist insbesondere vorteilhaft, wenn der Programmagent auf einem tragbaren elektronischen Gerät gespeichert ist, weil dieses folglich mit jeder beliebigen Datenverarbeitungsanlage verbunden werden kann und ein Zugriff auf die darauf enthaltenen Daten mittels des Programmagenten möglich ist, ohne dass die Datenverarbeitungsanlage in irgendeiner Weise eine besondere softwaremäßige Einrichtung, beispielsweise ein an den Programmagenten angepasste Einrichtung benötigt. In diesem Fall könnte der Programmagent beispielsweise jedesmal unmittelbar (und installationslos) aus dem elektronischen Gerät auf der Datenverarbeitungsanlage ausgeführt werden, wenn das elektronische Gerät mit der Datenverarbeitungsanlage verbunden wird.

In beispielhaften Ausgestaltungen der Erfindung ist eine Aktion mit den Daten erst möglich, wenn der Programmagent auf der Datenverarbeitungsanlage läuft. Dies wird beispielsweise dadurch erreicht, dass der Programmagent die mit ihm assoziierten Daten dem Betriebssystem verfügbar macht und/oder entschlüsselt.

Gemäß der Erfindung umfasst das erste Verfahren des Weiteren die Bestimmung der Aktionsrichtlinie. Die Bestimmung der Aktionsrichtlinie umfasst beispielsweise die Auswahl einer Aktionsrichtlinie aus mehreren vorgegebenen Aktionsrichtlinien und wird vorzugsweise von dem Programmagenten und/oder einem Profilagenten ausgeführt. Es ist beispielsweise denkbar, dass der Programmagent den Profilagenten aufruft, um die Aktionsrichtlinie zu bestimmen und der Profilagent nach der Bestimmung der Aktionsrichtlinie diese an den Programmagenten zurückgibt.

Der Profilagent ist beispielsweise zusammen mit dem Programmagenten auf dem elektronischen Gerät gespeichert und läuft auf der Datenverarbeitungsanlage.

Gemäß der Erfindung basiert die Bestimmung der Aktionsrichtlinie zumindest teilweise auf der Umgebung, in welcher der Programmagent läuft.

Zum Beispiel vergleicht der Profilagent die Umgebung der Datenverarbeitungsanlage mit verschiedenen vorgegebenen Umgebungsprofilen, wobei jedem Umgebungsprofil eine Aktionsrichtlinie zugeordnet ist. Der Profilagent wählt die Aktionsrichtlinie aus, die dem Umgebungsprofil mit den größten und/oder der exakten Übereinstimmung mit der Umgebung der Datenverarbeitungsanlage zugeordnet ist. Sollte keine und/oder eine zu geringe Übereinstimmung mit den vorgegebenen Umgebungsprofilen vorliegen, so ist denkbar, dass eine Aktionsrichtlinie mit minimalen Berechtigungen (z.B. nur Daten-Lesen), eine minimale Aktionsrichtlinie, durch den Profilagenten ausgewählt wird. Außerdem könnte die Aktionsrichtlinie abhängig vom Benutzer bestimmt werden.

In beispielhaften Ausgestaltungen der Erfindung umfasst das erste Verfahren des Weiteren die Übermittlung von Informationen über die Umgebung, in welcher der Programmagent läuft, an einen Server; und den Empfang von Informationen über die Aktionsrichtlinie von dem Server, wobei die Aktionsrichtlinie durch den Server zumindest teilweise basierend auf den übermittelten Informationen bestimmbar ist. Zum Beispiel kann der Profilagent zumindest teilweise auf dem Server laufen.

Gemäß der Erfindung umfasst die Umgebung, in welcher der Programmagent läuft, den Standort der Datenverarbeitungsanlage, deren Netzwerkverbindung und/oder die darauf installierten und/oder laufenden Anwendungen und/oder Prozesse.

Befindet sich die Datenverarbeitungsanlage beispielsweise innerhalb eines lokalen vertrauenswürdigen Netzwerks wie einem Firmennetzwerk, dann wird beispielsweise eine maximale Aktionsrichtlinie (s.u.) ausgewählt. Dies ist insbesondere der Fall, wenn der Programmagent auf einer Heimat-Datenverarbeitungsanlage läuft. Befindet sich die Datenverarbeitungsanlage jedoch in keinem lokalen ver-trauenswürdigen Netzwerk, dann wird beispielsweise die minimale Aktionsrichtlinie ausgewählt. Dies ist insbesondere der Fall, wenn der Programmagent auf einer Gast-Datenverarbeitungsanlage läuft.

Die maximale Aktionsrichtlinie lässt beispielsweise nahezu alle Aktionen mit Daten, wie Kopieren, Lesen, Ändern, Drucken, Löschen usw. zu. Die minimale Aktionsrichtlinie verhindert dagegen nahezu alle Aktionen mit Daten, wie Kopieren, Ändern, Drucken usw., die einzig erlaubte Aktion kann beispielsweise Anzeigen der Daten auf dem Bildschirm sein.

Eine mittlere Aktionsrichtlinie könnte dagegen für einige Daten nahezu alle Aktionen zulassen, für andere (z.B. besonders vertrauliche) Daten dagegen nur Lesen erlauben, (d.h. die Daten würden z.B. je nach Vertraulichkeit unterschiedlich klassifiziert). Die mittlere Aktionsrichtlinie könnte beispielsweise ausgewählt werden, wenn der Programmagent auf einer Gast-Datenverarbeitungsanlage läuft, die mit dem lokalen vertrauenswürdigen Netzwerk verbunden ist, zum Beispiel über ein virtuelles Privates Netzwerk (VPN).

In beispielhaften Ausgestaltungen der Erfindung ist die Bestimmung der Aktionsrichtlinie zumindest teilweise von einer Benutzerangabe abhängig.

Zum Beispiel kann der Programmagent und/oder der Profilagent den Benutzer über die Aktion mit den Daten informieren und ihn auffordern anzugeben, ob diese Aktion zugelassen oder unterbunden werden soll. Diese Informationen können beispielsweise gespeichert und wiederverwendet werden. Um zu verhindern, dass Ausspähprogramme die Benutzereingabe manipulieren, kann diese z.B. durch die zusätzliche Eingabe eines Passworts geschützt werden.

In beispielhaften Ausgestaltungen der Erfindung umfasst das erste Verfahren des Weiteren das Eintragen von einigen oder allen Programmen bzw. Prozessen, die auf der Datenverarbeitungsanlage laufen und die mindestens eine Aktion mit den Daten ausführen, in eine Verwenderliste. Sobald die Ausführung der Programme bzw. Prozesse beendet ist, werden diese von der Verwenderliste gelöscht.

Zum Beispiel können Programme, die mindestens eine Aktion mit den Daten ausführen, von anderen Programmen isoliert werden. Zum Beispiel könnte ihre Kommunikation mit anderen Programmen und/oder Prozessen grundsätzlich unterbunden und/oder erfindungsgemäß geprüft werden. Es ist auch denkbar, dass die Kommunikation mit einigen Programmen und/oder Prozessen unterbunden oder erfindungsgemäß geprüft, mit anderen jedoch erlaubt wird, d.h. die Daten würden z.B. je nach Vertraulichkeit unterschiedlich klassifiziert. Dies wird durch die Verwenderliste erleichtert.

In beispielhaften Ausgestaltungen der Erfindung umfasst das erste Verfahren des Weiteren die Beendigung aller auf der Datenverarbeitungsanlage laufenden Programme bzw. Prozesse, die auf der Verwenderliste eingetragen sind, vor Beendigung des Programmagenten. Dadurch wird verhindert, dass Programme, die Aktionen mit den Daten ausführen, auf der Datenverarbeitungsanlage weiter laufen, wenn der Programmagent beendet ist.

Dies ist wichtig, um zu verhindern, dass nach der Beendigung des Programmagenten Aktionen mit den Daten, die gegen die Aktionsrichtlinie verstoßen, ausgeführt werden können, da zumindest Teile der Daten beispielsweise noch als Speicherabbilder im Hauptspeicher der Datenverarbeitungsanlage vorhanden sein können. Diese Speicherabbilder werden z.B. bei der Beendigung der Programme bzw. Prozesse gelöscht. Dies kann zum Beispiel auch in einen virtuellen Hauptspeicher ausgelagerte Dateien betreffen.

Des Weiteren könnte bei der Beendigung des Programmagenten sichergestellt werden, dass weder der Programmagent noch Teile seines Programmcodes auf der Datenverarbeitungsanlage verbleiben.

In beispielhaften Ausgestaltungen der Erfindung umfasst die Aktionsrichtlinie eine sog. "schwarze" Liste mit Programmen, die keine Aktionen mit Daten ausführen und/oder aufrufen dürfen. Dass heißt z.B., dass Aufrufe von Funktionen, die Aktionen mit Daten ausführen, die mit dem Programmagenten assoziiert sind, gegen die Aktionsrichtlinie verstoßen, falls sie von Programmen auf der schwarzen Liste ausgehen.

Die Programme auf der schwarzen Liste sind beispielsweise vordefiniert, durch Benutzereingaben vorgebbar und/oder änderbar, und/oder aufgrund von vordefinierten Regeln bestimmbar und/oder aktualisierbar.

In beispielhaften Ausgestaltungen der Erfindung umfasst die Aktionsrichtlinie eine sog. "weiße" Liste mit Programmen, die Aktionen mit Daten ausführen und/oder aufrufen dürfen. Dass heißt z.B., dass Aufrufe von Funktionen, die Aktionen mit Daten ausführen, die mit dem Programmagenten assoziiert sind, nicht gegen die Aktionsrichtlinie verstoßen, falls sie von Programmen auf der weißen Liste ausgehen.

Die Programme auf der weißen Liste sind beispielsweise vordefiniert, durch Benutzereingaben vorgebbar und/oder änderbar, und/oder aufgrund von vordefinierten Regeln bestimmbar und/oder aktualisierbar.

Umfasst die Aktionsrichtlinie z.B. nur eine weiße Liste, dann ist der Programmagent vorzugsweise derart eingerichtet, dass Aktionen mit den Daten, die von anderen Programmen (als den auf der weißen Liste eingetragenen Programmen) ausgeführt und/oder aufgerufen werden, entweder gegen die Aktionsrichtlinie verstoßen und/oder der Benutzer aufgefordert wird anzugeben, ob sie gegen die Aktionsrichtlinie verstoßen.

In beispielhaften Ausgestaltungen der Erfindung umfasst mindestens eines der Verfahren die Aktualisierung des Programmagenten und/oder weiterer Agenten.

Die Aktualisierung des Programmagenten und/oder weiterer Agenten ist insbesondere von einem Aktualisierungsagenten ausführbar, welcher beispielsweise zusammen mit dem Programmagenten auf dem elektronischen Gerät gespeichert ist und auf der Datenverarbeitungsanlage läuft.

Der Aktualisierungsagent kann beispielsweise in regelmäßigen Abständen Aktualisierungsanweisungen, welche beispielsweise über ein gültiges Sicherheitszertifikat verfügen müssen, von einem Server abrufen und ausführen. Dadurch ist eine Korrektur von Fehlern und/oder eine Anpassung des Programmagenten und/oder der weiteren Agenten möglich. Eine Anpassung kann beispielsweise an eine neue Bedrohungslage, firmeninterne Richtlinien und/oder neue Erkenntnisse erfolgen.

Es ist beispielsweise denkbar, dass die Aktionsrichtlinien wie die schwarze und/oder die weiße Liste vom Aktualisierungsagenten in regelmäßigen Abständen aktualisiert wird, um beispielsweise neue Ausspähprogramme zu berücksichtigen.

In beispielhaften Ausgestaltungen der Erfindung umfasst mindestens eines der Verfahren die Erstellung einer Sicherheitskopie der mit dem Programmagenten assoziierten Daten, wobei die Erstellung der Sicherheitskopie zumindest teilweise abhängig von der/den Aktionsrichtlinie(n) sein kann.

Die Erstellung einer Sicherheitskopie ist beispielsweise von einem Sicherheitskopieagenten ausführbar, welcher beispielsweise zusammen mit dem Programmagenten auf dem elektronischen Gerät gespeichert ist und beispielsweise auf der Datenverarbeitungsanlage läuft.

In beispielhaften Ausgestaltungen der Erfindung umfasst mindestens eines der Verfahren das Aufzeichnen von Informationen und die Übermittlung der Informationen an einen Server. Vorzugsweise sollen alle Informationen über die Aktion mit den Daten aufgezeichnet, d.h. protokolliert werden, dazu gehören beispielsweise Zeit, Bezeichnung der Aktion (z.B. Funktionsname), betroffene Daten (z.B. Pfad) und ausführende Datenverarbeitungsanlage und/oder Prüfungsergebnis (Verstoß/kein Verstoß).

Diese Informationen können beispielsweise zur Speicherung und/oder Auswertung an einen Server geschickt werden.

Die Aufzeichnung und Übermittlung der Daten ist insbesondere von einem Protokollierungsagenten ausführbar, welcher beispielsweise zusammen mit dem Programmagenten auf dem elektronischen Gerät gespeichert ist und auf der Datenverarbeitungsanlage läuft.

In beispielhaften Ausgestaltungen der Erfindung wird das zweite Verfahren von dem lokalen Programmagenten ausgeführt, der auf der Datenverarbeitungsanlage läuft.

In beispielhaften Ausgestaltungen der Erfindung umfasst das System des Weiteren einen Server, wobei der Server eingerichtet ist, um Informationen zu empfangen, zu verarbeiten und/oder zu versenden. Dies können z.B. Informationen über die Aktion mit den Daten sein.

In beispielhaften Ausgestaltungen der Erfindung ist der Server eingerichtet, um Informationen über die Aktion mit den Daten zu speichern und auszuwerten. Die Speicherung und Auswertung der Informationen über die Aktion mit den Daten ist insbesondere von einem Datenbankagenten auf dem Server ausführbar.

In beispielhaften Ausgestaltungen der Erfindung ist der Server eingerichtet, um Änderungen der mit dem Programmagenten assoziierten Daten zu verwalten. Die Verwaltung der Änderungen der mit dem Programmagenten assoziierten Daten kann beispielsweise Daten in verschiedenen Versionen auf verschiedenen Datenverarbeitungsanlagen und/oder elektronischen Geräten betreffen. Zum Beispiel kann eine Änderung von Daten unter einer neuen Versionsnummer gespeichert werden, so dass sich Änderungen der Daten nachvollziehen lassen und die ursprünglichen Daten nicht gelöscht werden. Für den Benutzer sind beispielsweise nur Daten der jüngsten Versionsnummer standardmäßig und/oder abhängig von Benutzerrechten sichtbar. Die Verwaltung der Änderungen ist insbesondere von einem Versionsagenten ausführbar, der auf dem Server läuft.

In beispielhaften Ausgestaltungen der Erfindung ist der Server eingerichtet, um die elektronischen Geräte und deren Zuordnung zu Benutzern zu verwalten. Zum Beispiel kann der Server ein elektronisches Gerät dazu veranlassen, die darauf gespeicherten Daten zu löschen, wenn das elektronische Gerät als gestohlen gemeldet wurde. Die Zuordnung und Verwaltung der Benutzer ist insbesondere von einem Verwaltungsagenten ausführbar, der auf dem Server läuft.

In beispielhaften Ausgestaltungen der Erfindung ist der Server eingerichtet, um Entschlüsselungscodes zur Entschlüsselung der verschlüsselten Daten auf den elektronischen Geräten zu verwalten und wie-derherzustellen. Die Verwaltung und Wiederherstellung ist insbesondere von einem Entschlüsselungscodesverwaltungsagenten ausführbar, der auf dem Server läuft.

Die in dieser Anmeldung beschriebenen beispielhaften Ausgestaltungen der vorliegenden Erfindung sollen auch in allen Kombinationen miteinander offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen.

Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

In den Figuren zeigen
- Fig. 1:: ein Blockdiagramm einer beispielhaften Ausführungsform einer erfindungsgemäßen Datenträgervorrichtung;
- Fig. 2:: ein Blockdiagramm einer beispielhaften Ausführungsform einer Datenverarbeitungs-anlage;
- Fig. 3:: ein Blockdiagramm einer beispielhaften Ausführungsform eines erfindungsgemäßen Systems;
- Fig. 4a:: ein Ablaufdiagramm mit Verfahrensschritten einer beispielhaften Ausführungsform der Erfindung;
- Fig. 4b:: eine Vertrauensmatrix einer minimalen Aktionsrichtlinie gemäß der zweiten bevor-zugten Ausführungsform der Datenträgervorrichtung 1;
- Fig. 4c:: eine Vertrauensmatrix einer mittleren Aktionsrichtlinie gemäß der zweiten bevorzug-ten Ausführungsform der Datenträgervorrichtung 1;
- Fig. 4d:: eine Vertrauensmatrix einer maximalen Aktionsrichtlinie gemäß der zweiten bevor-zugten Ausführungsform der Datenträgervorrichtung 1;
- Fig. 5a:: ein Ablaufdiagramm mit Verfahrensschritten einer beispielhaften Ausführungsform der Erfindung;
- Fig. 5b:: ein Software-Schichtmodell einer beispielhaften Ausführungsform einer Datenverar-beitungsanlage;
- Fig. 6:: ein Ablaufdiagramm mit Verfahrensschritten einer beispielhaften Ausführungsform der Erfindung;
- Fig. 7a:: eine schematische Darstellung des Kopierens von Daten von einer Datenträgervorrich-tung auf eine andere Datenträgervorrichtung;
- Fig. 7b:: eine schematische Darstellung des Kopierens von Daten von einer erfindungsgemäßen Datenträgervorrichtung auf eine andere Datenträgervorrichtung;
- Fig. 7c:: ein Ablaufdiagramm mit Verfahrensschritten einer beispielhaften Ausführungsform der Erfindung; und
- Fig. 7d:: ein Pseudocode einer Funktion des Programmagenten.

### Detaillierte Beschreibung einiger beispielhafter Ausführungsformen der vorliegenden Erfindung

Die vorliegende Erfindung wird im Folgenden anhand von beispielhaften Ausführungsformen, insbesondere in Form einer erfindungsgemäßen Datenträgervorrichtung, die einen Programmagenten und mit dem Programmagenten assoziierte Daten enthält, beschrieben.

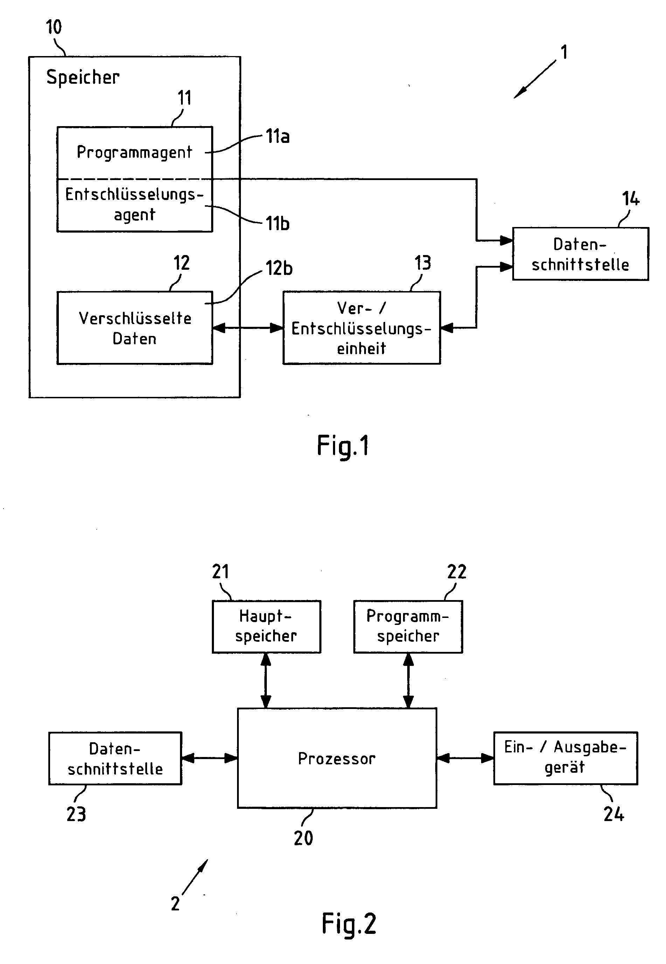

Fig. 1 zeigt ein Blockdiagramm einer beispielhaften Ausführungsform einer erfindungsgemäßen Datenträgervorrichtung 1. Datenträgervorrichtung 1 weist unter anderem einen Speicher 10 auf, welcher in zwei Speicherbereiche 11 und 12 unterteilt ist. Speicher 10 ist ein nicht-flüchtiger Speicher, z.B. ein Flash-Speicher.

Speicherbereich 11 ist als Nur-Lese-Speicherbereich, z.B. als CD-ROM-Image, ausgebildet und enthält einen Programmagenten 11a und einen Entschlüsselungsagenten 11b. Speicherbereich 12 ist als Schreib-Lese-Speicherbereich ausgebildet und enthält verschlüsselte Daten 12b, die mit dem Programmagenten 11a assoziiert sind.

Des Weiteren weist Datenträgervorrichtung 1 eine Ver- und/oder Entschlüsselungseinheit 13 auf, die sowohl verschlüsselte Daten 12b aus Speicherbereich 12 lesen und entschlüsseln als auch Daten verschlüsseln und in Speicherbereich 12 schreiben kann.

Über Datenschnittstelle 14 kann Datenträgervorrichtung 1 mit einer korrespondieren Datenschnittstelle einer Datenverarbeitungsanlage (z.B. Datenschnittstelle 23 der Datenverarbeitungsanlage 2 in Fig. 2) trennbar verbunden werden. Dabei kann über Datenschnittstelle 14 auf Speicherbereich 11 und auf Ver- und/oder Entschlüsselungseinheit 13 zugegriffen werden. Datenschnittstelle 14 ist vorzugsweise als USB-Schnittstelle ausgebildet, und Datenträgervorrichtung 1 ist vorzugsweise tragbar und als USB-Memory-Stick ausgebildet. Die Verbindung kann mechanisch z.B. durch Einstecken erfolgen und ist reversibel.

In einem ersten Beispiel der Datenträgervorrichtung 1 ist diese als USB-Memory-Stick ausgebildet, der bereits bei der Auslieferung an den Benutzer den Entschlüsselungsagenten 11b und den Programmagenten 11a enthält. Ein solcher USB-Memory-Stick wird aufgrund der Verschlüsselung der darauf gespeicherten Daten 12b in erster Linie zum Speichern und Transportieren von vertraulichen Daten verwendet.

Gemäß des ersten Beispiels der Datenträgervorrichtung 1 ist der Programmagent 11a derart eingerichtet, dass er nur Aktionen mit den Daten 12b zulässt, die von Programmen aufgerufen oder ausgeführt werden, die auf einer sog. "weißen" Liste eingetragen sind; Aktionen mit Daten 12b, die von anderen (als auf der weißen Liste eingetragenen) Programmen aufgerufen oder ausgeführt werden, werden vom Programmagenten 11a unterbunden. In dem ersten Beispiel der Datenträgervorrichtung 1 ist die Aktionsrichtlinie folglich durch die weiße Liste repräsentiert.

Durch dieses erste Beispiel wird unter anderem verhindert, dass Ausspähprogramme, die auf einer Datenverarbeitungsanlage (z.B. Datenverarbeitungsanlage 2) laufen, Zugriff auf die Daten 12b erhalten, sobald Speicherbereich 12 als Laufwerk in die Laufwerkstruktur der Datenverarbeitungsanlage eingebunden wurde.

In einem zweiten Beispiel der Datenträgervorrichtung 1, das eine bevorzugte Ausführungsform der Datenträgervorrichtung 1 bildet, ist diese ebenfalls als USB-Memory-Stick ausgebildet, der Teil einer DLP-Lösung ist und bereits bei der Auslieferung an den Benutzer den Entschlüsselungsagenten und den Programmagenten enthält. Solche DLP-Lösungen verhindern z.B., dass Daten, insbesondere vertrauliche Daten, unberechtigt aus dem von den DLP-Lösungen kontrollierten Bereich entnommen werden, z.B. durch Kopieren auf tragbare Datenträgervorrichtungen.

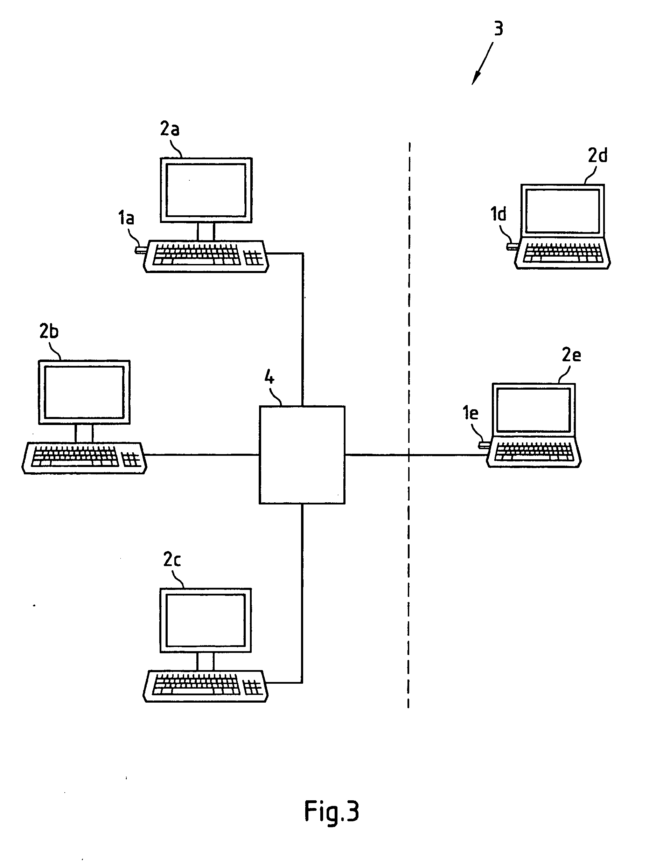

Der von einer DLP-Lösung kontrollierte Bereich ist in erster Linie ein lokales vertrauenswürdiges Firmennetzwerk mit den darin enthaltenen vertraulichen Daten, wobei auf jeder Datenverarbeitungsanlage innerhalb eines solchen Firmennetzwerks (z.B. Heimat-Datenverarbeitungsanlagen 2a-c in Fig. 3) ein lokaler Programmagent installiert ist, der unter anderem kontrolliert, dass von diesen Datenverarbeitungsanlagen keine vertraulichen Daten unberechtigt entnommen oder verbreitet werden. Trotzdem besteht die Notwendigkeit sicherzustellen, dass vertrauliche Daten aus dem von der DLP-Lösung kontrollierten Bereich entnommen werden können, beispielsweise um einem Außendienstmitarbeiter die Möglichkeit zu geben vertrauliche Daten (wie Preislisten, Kundenpräsentationen, o.ä.) auch außerhalb des Firmennetzwerks verwenden zu können.

Gemäß der bevorzugten Ausführungsform der Datenträgervorrichtung 1 ist der Programmagent 11a derart eingerichtet, dass er nur Aktionen mit den Daten 12b zulässt, die nicht zu einer unberechtigten Entnahme bzw. Verbreiten der Daten 12b führen. Dass heißt, der Programmagent 11a dehnt den von der DLP-Lösung kontrollierten Bereich über das lokale vertrauenswürdige Firmennetzwerk aus, indem er die Daten 12b auch außerhalb dieses Bereichs vor unberechtigter Entnahme bzw. Verbreiten schützt. Dies geschieht beispielsweise durch eine umgebungsabhängige Bestimmung der Aktionen mit Daten 12b, die der Programmagent 11a zulässt (umgebungsabhängige Aktionsrichtlinie).

Ist die bevorzugte Ausführungsform der Datenträgervorrichtung 1 mit einer Datenverarbeitungsanlage innerhalb des Firmennetzwerks (z.B. Heimat-Datenverarbeitungsanlage 2a in Fig. 3) verbunden, dann lässt der Programmagent alle oder nahezu alle Aktionen mit Daten zu wie Daten-Kopieren, Daten-Lesen, Daten-Ändern, Daten-Drucken, Daten-Löschen usw. Außerhalb des Firmennetzwerks (z.B. Datenverarbeitungsanlage 2d oder 2e in Fig. 3) dagegen, wird beispielsweise nur Daten-Lesen vom Programmagenten 11a zugelassen. Der lokale Programmagent lässt demnach nur das Übertragen von vertraulichen Daten innerhalb des Firmennetzwerks oder auf Datenvorrichtungen zu, die gemäß der bevorzugten Ausführungsform der Datenträgervorrichtung 1 ausgebildet sind.

Sowohl in dem ersten Beispiel als auch in der bevorzugten Ausbildungsform können beispielsweise alle in Speicherbereich 12 enthaltenen Daten 12b mit dem Programmagenten 11a (zwingend) assoziiert sein.

In einem dritten Beispiel wird die Datenträgervorrichtung 1 bzw. eine Verbindung mit der Datenträgervorrichtung 1 durch eine Datenverarbeitungsanlage (z.B. Datenverarbeitungsanlagen 2a-d in Fig. 3) nur emuliert. Insbesondere kann auch eine Verbindung mit dem ersten Beispiel oder der bevorzugten Ausführungsform der Datenträgervorrichtung 1 emuliert werden.

Dafür werden Speicherbilder der Speicherbereiche 11 und 12 erstellt und in einer ausführbaren Archiv-Datei gespeichert, wobei beim Ausführen der ausführbaren Archiv-Datei der Entschlüsselungsagent gestartet wird.

Durch die Emulation einer Verbindung mit der Datenträgervorrichtung 1 werden die Funktionalitäten der Datenträgervorrichtung 1 softwaremäßig nachgebildet, so dass für einen Benutzer der Datenverarbeitungsanlage bei der Emulation kein Unterschied zur Verbindung mit einer tatsächlichen Datenträgervorrichtung feststellbar ist.

Fig. 2 zeigt ein Blockdiagramm einer beispielhaften Ausführungsform einer Datenverarbeitungsanlage 2. Datenverarbeitungsanlage 2 kann sowohl eine Heimat-Datenverarbeitungsanlage als auch eine Gast-Datenverarbeitungsanlage sein.

Prozessor 20 von Datenverarbeitungsanlage 2 ist insbesondere als Mikroprozessor, Mikrokontrolleinheit wie Mikrocontroller, digitaler Signalprozessor (DSP), Anwendungsspezifische Integrierte Schaltung (ASIC) oder Field Programmable Gate Array (FPGA) ausgebildet.

Prozessor 20 führt z.B. Programmanweisungen aus, die in Programmspeicher 22 gespeichert sind, und speichert beispielsweise Zwischenergebnisse oder ähnliches in Hauptspeicher 21. Zum Beispiel ist Programmspeicher 22 ein Nur-Lese-Speicher (ROM) und Hauptspeicher 21 ist ein flüchtiger- oder nicht-flüchtiger-Speicher, insbesondere ein Speicher mit wahlfreiem-Zugriff (RAM) und/oder ein Flash-Speicher.

Programmspeicher 22 ist vorzugsweise ein lokaler mit der Datenverarbeitungsanlage 2 fest verbundener Datenträger. Mit der Datenverarbeitungsanlage 2 fest verbundene Datenträger sind beispielsweise Festplatten, die in die Datenverarbeitungsanlage 2 eingebaut sind.

Programmspeicher 22 enthält das Betriebssystem von Datenverarbeitungsanlage 2, das beim Starten der Datenverarbeitungsanlage 2 zumindest teilweise in Hauptspeicher 21 geladen und vom Prozessor 20 ausgeführt wird. Insbesondere wird beim Starten von Datenverarbeitungsanlage 2 der Kern des Betriebsystems in Hauptspeicher 21 geladen und von Prozessor 20 ausgeführt.

Das Betriebsystem von Datenverarbeitungsanlage 2 ist vorzugsweise ein Windows-Betriebsystem. Ein alternatives oder zusätzliches Betriebssystem für Datenverarbeitungsanlage 2 ist beispielsweise ein UNIX-, Linux-, DOS- und/oder MAC-Betriebsystem.

Erst das Betriebssystem ermöglicht die Verwendung von Datenverarbeitungsanlage 2 zur Datenverarbeitung. Es verwaltet beispielsweise Betriebsmittel wie Hauptspeicher 21 und Programmspeicher 22, Datenschnittstelle 23, Ein- und Ausgabegeräte 24, stellt unter anderem durch Programmierschnittstellen anderen Programmen grundlegende Funktionen zur Verfügung und steuert die Ausführung von Programmen.

Der Kern des Betriebssystems bildet die unterste Softwareschicht von Datenverarbeitungsanlage 2 und hat direkten Zugriff auf die Hardware wie Hauptspeicher 21, Programmspeicher 22, Datenschnittstelle 23 und Ein- und Ausgabegeräte 24. Teil des Kerns des Betriebssystems können beispielsweise Treiber sein, die einen Zugriff auf bestimmte Hardwarekomponenten bzw. deren Steuerung ermöglichen. Nicht zum Kern des Betriebssystems kann beispielsweise eine graphische Benutzeroberfläche gehören.

Prozessor 20 steuert die Datenschnittstelle 23, wobei die Steuerung der Datenschnittstelle 23 beispielsweise durch einen Treiber ermöglicht wird, der Teil des Kerns des Betriebssystems ist. Datenschnittstelle 23 ist vorzugsweise als USB-Schnittstelle ausgebildet. Insbesondere korrespondiert Datenschnittstelle 23 derart mit Datenschnittstelle 14, dass Datenverarbeitungsanlage 2 mit Datenträgervorrichtung 1, wie oben erläutert, trennbar verbindbar ist.

Des Weiteren steuert Prozessor 20 zumindest ein Ein-/Ausgabegerät 24. Ein-/Ausgabegerät 24 ist beispielsweise als Tastatur, Maus, Anzeigeeinheit, Mikrofon, berührungsempfindliche Anzeigeeinheit, Lautsprecher und/oder Kamera ausgebildet. Ein-/Ausgabegerät 24 kann beispielsweise Benutzerangaben aufnehmen und an Prozessor 20 weiterleiten und/oder Informationen für den Benutzer von Prozessor 20 empfangen und ausgeben.

Fig. 3 zeigt ein Blockdiagramm einer beispielhaften Ausführungsform eines erfindungsgemäßen Systems 3. System 3 umfasst Heimat-Datenverarbeitungsanlagen 2a, 2b, 2c, Gast-Datenverarbeitungsanlagen 2d, 2e, Datenträgervorrichtungen 1a, 1d, 1e und Server 4. Datenverarbeitungsanlagen 2a-2e entsprechen der Datenverarbeitungsanlage 2. Heimat-Datenverarbeitungsanlage 2a-c und Server 4 sind Teil der oben erläuterten DLP-Lösung, die auch Datenträgervorrichtungen 1a, 1d und 1e umfasst, die gemäß der bevorzugten Ausführungsform der Datenträgervorrichtung 1 ausgebildet sind. Datenträgervorrichtungen 1a, 1d und 1e sind mit den entsprechenden Datenverarbeitungsanlagen 2a, 2d, und 2e über eine Datenschnittstelle (z.B. Datenschnittstelle 14 in Fig. 1 und Datenschnittstelle 23 in Fig. 2) trennbar verbunden.

Heimat-Datenverarbeitungsanlagen 2a, 2b, 2c sind miteinander und mit Server 4 über ein lokales vertrauenswürdiges Firmennetzwerk verbunden. Auf Heimat-Datenverarbeitungsanlagen 2a, 2b, und 2c ist der lokale Programmagent als Teil der oben erläuterten DLP-Lösung installiert. Der lokale Programmagent wird beim Starten der Heimat-Datenverarbeitungsanlagen geladen und läuft darauf ohne Unterbrechung.

Sobald der lokale Programmagent auf den Heimat-Datenverarbeitungsanlagen läuft, ist er der internen Kommunikation der Datenverarbeitung zwischengeschaltet, d.h er leitet die interne Kommunikation der Datenverarbeitungsanlage bzw. Teile der internen Kommunikation der Datenverarbeitungsanlage auf sich um. Dadurch werden beispielsweise allgemeine Programm-, Prozedur- und/oder Schnittstellenaufrufe auf den lokalen Programmagenten umgeleitet, die beispielsweise Funktionen zum Daten-Kopieren und Daten-Bewegen betreffen.

Die interne Kommunikation einer Datenverarbeitungsanlage kann zum Beispiel die Kommunikation zwischen Programmen, die auf der Datenverarbeitungsanlage laufen, mit anderen Programmen und/oder dem Betriebssystem der Datenverarbeitungsanlage betreffen; dazu zählen beispielsweise Programm-, Prozedur- und/oder Schnittstellenaufrufe. Die interne Kommunikation einer Datenverarbeitungsanlage kann aber zum Beispiel auch die Kommunikation zwischen verschiedenen physikalischen Einheiten der Datenverarbeitungsanlage betreffen, wie Hauptspeicher, Programmspeicher, Prozessor und/oder Datenschnittstelle, etc.

Die Umleitung von Programm-, Prozedur- und/oder Schnittstellenaufrufen wird beispielsweise durch sogenanntes API Hooking erreicht, das z.B. in der US Patentanmeldung US 2005/0108733 A1 der Microsoft Corporation beschrieben ist. Grundsätzlich ist "API Hooking" in allen Betriebssystemen die Programmierschnittstellen zur Verfügung stellen denkbar. Dies können beispielsweise Windows-, UNIX-, Linux-, DOS- oder MAC-Betriebsysteme sein.

Eine solche Programmierschnittstelle in einem Windows-Betriebssystem ist beispielsweise die Windows-Anwendungs-Programmierschnittstelle (engl. Windows Application Programming Interface, WINAPI), welche grundlegende Funktionen für alle Programme, die auf einer Datenverarbeitungsanlage mit einem Windows-Betriebssystem laufen, zur Verfügung stellt. Funktionen der WINAPI, welche auf den lokalen Programmagenten umgeleitet werden, sind beispielsweise: CopyFile und MoveFile.

Dadurch werden Aufrufe der Funktionen zum Daten-Kopieren und Daten-Bewegen an den lokalen Programmagenten umgeleitet.

Gast-Datenverarbeitungsanlage 2d befindet sich außerhalb des Firmennetzwerks und ist nicht mit dem Firmennetzwerk verbunden. Das ist beispielsweise der Fall, wenn ein Außendienstmitarbeiter lediglich die tragbare Datenträgervorrichtung 1d mit zu einem Kunden nimmt und eine Präsentation (die in Speicherbereich 12b von Datenträgervorrichtung 1d gespeichert ist) auf der Datenverarbeitungsanlage 2d des Kunden ausführt.

Gast-Datenverarbeitungsanlage 2e befindet sich ebenfalls außerhalb des Firmennetzwerks und ist mit Server 4 über ein Weitverkehrsnetz (z.B. durch ein virtuelles Privates Netzwerk, VPN) verbunden. Gast-Datenverarbeitungsanlage 2e ist beispielsweise eine tragbare Datenverarbeitungsanlage (z.B. ein Laptop, ein PDA, ein Mobiltelefon, etc.) eines Außendienstmitarbeiters, über welche dieser seine Emails von Server 4 abruft.

Server 4 ist zumindest teilweise als Firewall und/oder Gateway ausgebildet und verbindet das lokale Firmennetzwerk mit einem Weitverkehrsnetz wie dem Internet. Des Weiteren können auf Server 4 weitere Agenten laufen, z.B. ein Datenbankagent, Versionsagent, Verwaltungsagent und/oder Entschlüsselungscodesverwaltungsagent, welche beispielsweise mit Agenten auf Datenträgervorrichtungen 1a, 1d, 1e und/oder Datenverarbeitungsanlagen 2a-2e zusammenarbeiten, z.B. zur Aktualisierung des Programmagenten.

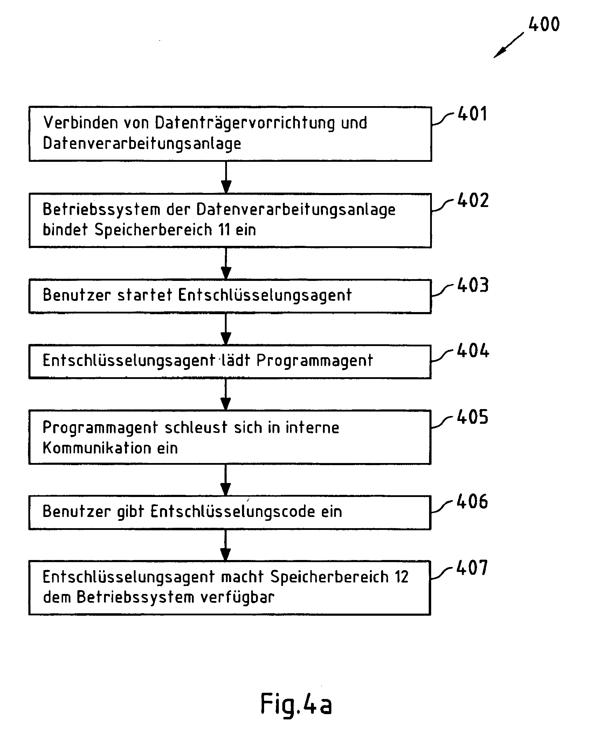

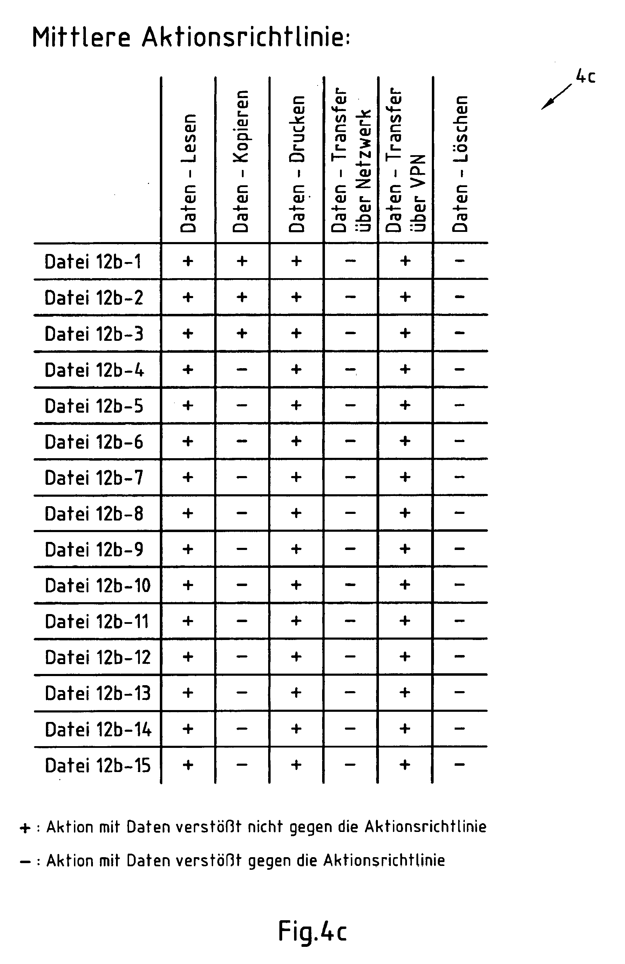

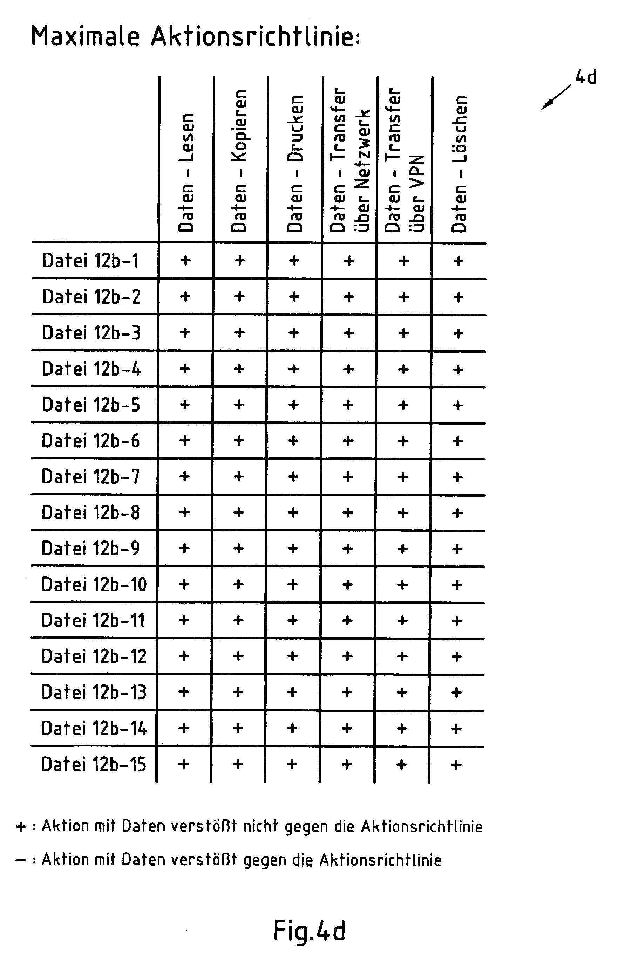

Fig. 4a zeigt ein Ablaufdiagramm 400 mit Verfahrensschritten einer beispielhaften Ausführungsform der Erfindung, die jedesmal ablaufen, wenn eine erfindungsgemäße Datenträgervorrichtung 1 mit einer Datenverarbeitungsanlage 2 verbunden wird. Dies betrifft insbesondere auch die Verbindung des ersten Beispiels oder der bevorzugten Ausführungsform der Datenträgervorrichtung 1 mit einer Datenverarbeitungsanlage 2 (z.B. Datenverarbeitungsanlage 2a, 2d, 2e in Fig. 3).

In Schritt 401 erfolgt die Verbindung von Datenträgervorrichtung 1 mit Datenverarbeitungsanlage 2, indem der Benutzer beispielsweise Datenschnittstelle 14, welche als USB-Schnittstelle ausgebildet ist, in die dazu korrespondierende Datenschnittstelle 23 einsteckt.

In Schritt 402 erkennt das Betriebssystem der Datenverarbeitungsanlage 2, dass über Datenschnittstelle 23 eine Verbindung mit Datenträgervorrichtung 1 hergestellt wurde, und bindet Speicherbereich 11 als neues Laufwerk in die Laufwerksstruktur der Datenverarbeitungsanlage 2 ein.

Ist Datenträgervorrichtung 1 beispielsweise als USB-Memory-Stick (z.B. gemäß dem ersten Beispiel und/oder der bevorzugten Ausführungsform der Datenträgervorrichtung 1) ausgebildet, so kann die Einbindung des Speicherbereichs 11 z.B. durch einen Treiber erfolgen, der standardmäßig zusammen mit dem Kern des Betriebssystems geladen wird bzw. darin enthalten ist und die in USB-Memory-Sticks enthaltenen Daten dem Betriebssystem standardmäßig verfügbar macht. Eine Installation eines Treibers wäre in diesem Fall nicht notwendig, die Einbindung des Speicherbereichs 11 würde installations-los erfolgen. Folglich wären auch alle ausführbaren Programme, die in Speicherbereich 11 gespeichert sind, installationslos ausführbar.

Über die in Speicherbereich 12 enthaltenen Daten 12b kann das Betriebssystem dagegen noch nicht verfügen, da diese verschlüsselt sind und Ver- und/oder Entschlüsselungseinheit 13 jeden Zugriff darauf verhindert.

In Schritt 403 startet der Benutzer den Entschlüsselungsagenten 11b, der als ausführbares Computerprogramm ausgebildet ist und sich auf dem neu eingebundenen Laufwerk befindet. Alternativ ist beispielsweise denkbar, dass der Entschlüsselungsagent 11b vom Betriebssystem automatisch gestartet wird, sobald Speicherbereich 11 als neues Laufwerk in die Laufwerkstruktur der Datenverarbeitungsanlage 2 eingebunden wird (z.B. über die Autorun-Funktionalität des Windows-Betriebssystems).

Beim Starten des Entschlüsselungsagenten 11b wird dessen Programmcode über Datenschnittstelle 23 (z.B. unmittelbar) in Hauptspeicher 21 geladen und von Prozessor 20 ausgeführt. Der Entschlüsselungsagent 11b läuft nach dem Starten beispielsweise als Prozess auf Datenverarbeitungsanlage 2 ab.

Sobald der Entschlüsselungsagent 11b auf Datenverarbeitungsanlage 2 läuft, startet er in Schritt 404 den Programmagenten 11a. Dass heißt, der Entschlüsselungsagent 11b veranlasst, dass der Programmagent 11a (z.B. über Datenschnittstelle 23) in Hauptspeicher 21 geladen und auf Prozessor 20 ausgeführt wird. Der Programmagent 11a läuft nach dem Starten beispielsweise als Teil des Prozesses des Entschlüsselungsagenten 11b oder als eigener Prozess auf Datenverarbeitungsanlage 2 ab.

Sobald der Programmagent 11a auf Datenverarbeitungsanlage 2 läuft, schleust er sich in Schritt 405 in die interne Kommunikation der Datenverarbeitungsanlage ein und leitet Aufrufe von Programmierschnittstellen, die als Prozesse auf der Datenverarbeitungsanlage 2 laufen und anderen Programmen Funktionen, die Aktionen mit Daten ausführen, zur Verfügung stellen, auf sich um. Dass heißt, nach der Einschleusung ist der Programmagent der internen Kommunikation der Datenverarbeitungsanlage zwischengeschaltet.

Typischerweise sind Programmierschnittstellen als dynamische Bibliotheken ausgebildet und werden z.B. als Teil des Betriebssystems beim Starten der Datenverarbeitungsanlage 2 in Hauptspeicher 21 geladen und von Prozessor 20 ausgeführt. Programmierschnittstellen laufen auf Datenverarbeitungsanlage 2 als Prozesse.

Solche Programmierschnittstellen in einem Windows-Betriebssystem sind beispielsweise die Windows-Anwendungs-Programmierschnittstelle (engl. Windows Application Programming Interface, WINAPI) und die Windows-Sockel-Programmierschnittstelle (engl. Windows Socket Application Programming Interface, Winsock-API).

Die WINAPI stellt grundlegende Funktionen für alle Programme, die auf einer Datenverarbeitungsanlage mit einem Windows-Betriebssystem laufen, zur Verfügung. Funktionen der WINAPI, deren Aufrufe auf den Programmagenten 11a umgeleitet werden, sind beispielsweise: CopyFile, MoveFile, StartDoc, StartDocPrinter, CreateFile und GetClipBoardData.

Die Winsock-API stellt Funktionen zum Zugriff auf Netzwerkkomponenten für alle Programme, die auf einer Datenverarbeitungsanlage mit einem Windows-Betriebssystem laufen, zur Verfügung. Funktionen der Winsock-API, deren Aufrufe auf den Programmagenten 11a umgeleitet werden, sind beispielsweise: send und sendto.

Dadurch werden Aufrufe der Funktionen, die Aktionen mit Daten ausführen, an den Programmagenten 11a umgeleitet.

Gemäß der bevorzugten Ausführungsform der Datenträgervorrichtung 1 wird, nachdem die beschriebenen Umleitungen eingerichtet sind, die umgebungsabhängige Aktionsrichtlinie bestimmt. Die Aktionsrichtlinie legt fest, welche Aktionen mit Daten 12b, die mit dem Programmagenten 11a assoziiert sind, zugelassen oder unterbunden werden.

Für die Bestimmung wird die Umgebung der Datenverarbeitungsanlage 2 (auf der der Programmagent 11a läuft) mit vorgegebenen Umgebungsprofilen verglichen und die Aktionsrichtlinie ausgewählt, die dem Umgebungsprofil mit den exakten oder größten Übereinstimmungen zugeordnet ist. Sollten die Übereinstimmungen mit den vorgegebenen Umgebungsprofilen zu gering sein, dann kann z.B. eine minimale Aktionsrichtlinie ausgewählt werden.

Die Umgebung der Datenverarbeitungsanlage 2 betrifft zumindest deren Standort bzw. Netzwerkverbindungen.

Heimat-Datenverabeitungsanlage 2a (in Fig. 3) befindet sich z.B. innerhalb des lokalen vertrauenswürdigen Firmennetzwerks, so dass in diesem Fall eine maximale Aktionsrichtlinie ausgewählt würde. Gemäß der maximalen Aktionsrichtlinie werden alle oder nahezu alle Aktionen mit Daten 12b der Datenträgervorrichtung 1a zugelassen.

Gast-Datenverarbeitungsanlage 2d befindet sich außerhalb des lokalen vertrauenswürdigen Firmennetzwerks, so dass in diesem Fall eine minimale Aktionsrichtlinie ausgewählt würde. Gemäß der minimalen Aktionsrichtlinie werden nur Aktionen mit Daten 12b der Datenträgervorrichtung 1d wie Daten-Lesen zugelassen.

Gast-Datenverarbeitungsanlage 2e befindet sich außerhalb des lokalen vertrauenswürdigen Firmennetzwerks, ist jedoch über ein Weitverkehrsnetz mit Server 4 (z.B. durch einen virtuelles Privates Netzwerk, VPN) verbunden, so dass in diesem Fall eine mittlere Aktionsrichtlinie ausgewählt würde. Gemäß der mittleren Aktionsrichtlinie werden beispielsweise nur Aktionen mit Daten 12b der Datenträgervorrichtung 1e wie Daten-Lesen und der Transfer von Daten 12b an bzw. über Server 4 (z.B. über das VPN) zugelassen.

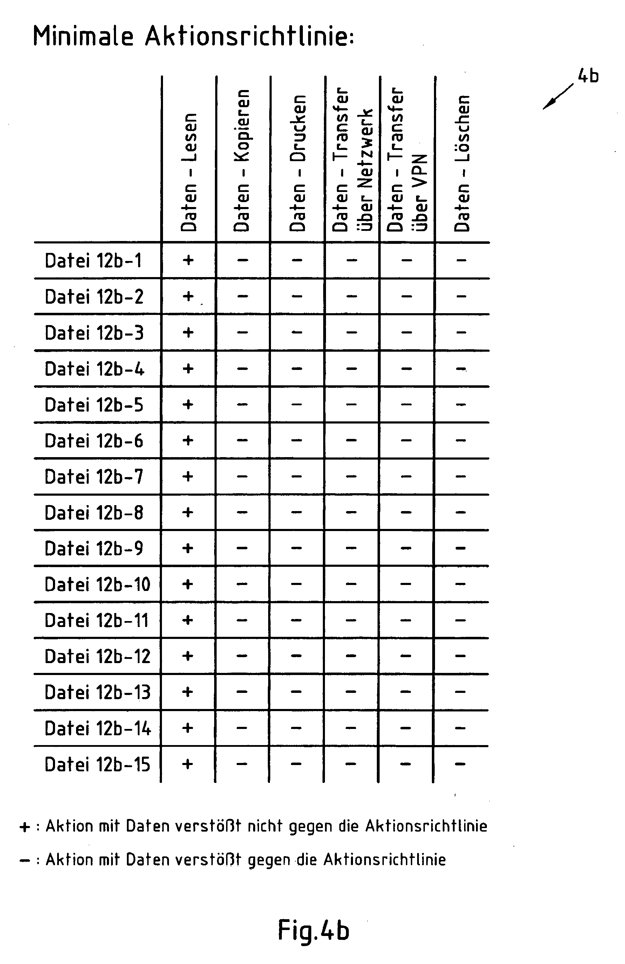

Die umgebungsabhängigen Aktionsrichtlinien sind beispielsweise als Matrix (z.B. Vertrauensmatrix 4b, 4c und 4d in Figs. 4b-d) ausgebildet, der zu entnehmen ist, welche Aktion mit welchen der Daten 12b zugelassen werden soll und welche nicht.

Im Gegensatz dazu ist in dem ersten Beispiel der Datenträgervorrichtung 1 eine Bestimmung der Aktionsrichtlinie nicht notwendig, da die weiße Liste unabhängig von der Umgebung der Datenverarbeitungsanlage ist, auf der der Programmagent 11a läuft.

In Schritt 406 gibt der Benutzer seinen Entschlüsselungscode ein, nachdem er vom Entschlüsselungsagenten 11b dazu aufgefordert wurde.

In Schritt 407 leitet der Entschlüsselungsagent 11b den vom Benutzer eingegebenen Entschlüsselungscode an Ver- und/oder Entschlüsselungseinheit 13 weiter, welche den Entschlüsselungscode überprüft und, falls er richtig ist, den Schlüssel zur Entschlüsselung der verschlüsselten Daten in Speicherbereich 12 freischaltet.

Durch die Freischaltung des Schlüssels werden die verschlüsselten Daten in Speicherbereich 12 dem Betriebssystem verfügbar gemacht, welches Speicherbereich 12 anschließend als neues Laufwerk in die Laufwerkstruktur der Datenverarbeitungsanlage 2 einbindet.

Ein Zugriff auf die verschlüsselten Daten 12b erfolgt nun transparent, d.h. sie werden durch Ver- und/oder Entschlüsselungseinheit 13 auf Anforderung automatisch ("on-the-fly") entschlüsselt. Es ist also beim Zugriff auf die Daten 12b in Speicherbereich 12, kein Unterschied zum Zugriff auf unverschlüsselte Daten auf anderen Laufwerken (z.B. Speicherbereich 11) feststellbar.

Gemäß dem dritten Beispiel wird beim Ausführen der ausführbaren Archiv-Datei der Entschlüsselungsagent 11b gestartet, dies entspricht Schritt 403 in Ablaufdiagramm 400. Die vorhergehenden Schritt 401 und 402 sind nach dem dritten Beispiel nicht notwendig, da sich die ausführbare Archiv-Datei bereits in einem Speicher (z.B. Programmspeicher 22) der Datenverarbeitungsanlage 2 befindet. Beispielsweise ist die ausführbare Archiv-Datei per Email an die Datenverarbeitungsanlage 2 übertragen worden. Nach dem Start des Entschlüsselungsagenten 11b werden die Schritte 404-406 wie in Ablaufdiagramm 400 ausgeführt.

Schritt 407 wird gemäß dem dritten Beispiel jedoch leicht abgewandelt, und zwar überprüft der Entschlüsselungsagent 11b den eingegebenen Entschlüsselungscode und, falls er richtig ist, macht er dem Betriebssystem das Speicherbild von Speicherbereich 12 (d.h. die verschlüsselten Daten 12b) derart verfügbar, dass das Speicherbild als neues virtuelles Laufwerk in die Laufwerkstruktur der Datenverarbeitungsanlage 2 eingebunden wird. Der Zugriff auf die Daten 12b erfolgt nun ebenfalls transparent, und für den Benutzer ist kein Unterschied zum Zugriff auf Daten auf anderen (tatsächlichen) Laufwerken feststellbar.

Figs. 4b-d zeigen beispielhaft die Vertrauensmatrizen 4b-d einer minimalen, mittleren und maximalen Aktionsrichtlinie gemäß der bevorzugten Ausführungsform der Datenträgervorrichtung 1.

Die Vertrauensmatrizen geben an, ob eine bestimmte Aktion mit bestimmten Daten der verschlüsselten Daten 12b zugelassen werden soll oder nicht.

In den Vertrauensmatrizen 4b-d ist jeder Datei (Dateien 12b-1 - 12b-15) als kleinstes Element der verschlüsselten Daten 12b eine Zeile zugeordnet und jeder Aktion ist eine Spalte zugeordnet, wobei die Verknüpfung in der Zelle, die zu einer Aktion und zu einer Datei gehört, festlegt, ob diese Aktion mit dieser Datei gegen die jeweilige Aktionsrichtlinie verstößt oder nicht, d.h. unterbunden oder zugelassen werden soll.

Die Verknüpfung "+" steht dabei für eine Aktion mit Daten, die nicht gegen die Aktionsrichtlinie verstößt; und die Verknüpfung "-" steht dabei für eine Aktion mit Daten, die gegen die Aktionsrichtlinie verstößt.

Gemäß der Vertrauensmatrix 4b der maximalen Aktionsrichtlinie sind beispielsweise alle Aktionen mit den Dateien 12b-1 - 12b-15 zugelassen. Im Gegensatz dazu lässt die Vertrauensmatrix 4d der minimalen Aktionsrichtlinie nur die Aktion Daten-Lesen für alle Dateien 12b-1 - 12b-15 zu und verhindert alle anderen Aktionen.

Gemäß der Vertrauensmatrix 4c der mittleren Aktionsrichtlinie soll z.B. die Aktion Daten-Lesen für alle Dateien 12b-1 - 12b-15 zugelassen werden. Die Aktion Daten-Löschen soll in diesem Fall für alle Dateien 12b-1 - 12b-15 unterbunden werden. Des Weiteren dürfen Dateien 12b-1 - 12b-3 kopiert werden, Dateien 12b-4 - 12b-15 jedoch nicht. Eine solche Abstufung ist beispielsweise sinnvoll, um einen Außendienstmitarbeiter die Weitergabe weniger oder nicht vertraulicher Dateien 12b-1 - 12b-3 zu ermöglichen. Um den Datenaustausch mit Kollegen innerhalb des lokalen vertrauenswürdigen Firmennetzwerks zu gestatten, soll außerdem der Transfer aller Dateien 12b-1 - 12b-15 über ein VPN mit Server 4 zugelassen werden.

Grundsätzlich können die Aktionsrichtlinien (z.B. Vetrauensmatrizen 4b-4d, weiße Liste, etc.) beispielsweise Teil des Programmagenten sein und sind z.B. von einem Administrator vordefiniert und werden von diesem auch angepasst. Die Anpassung kann beispielsweise über einen Aktualisierungsvorgang durch ein entsprechendes Programm (z.B. einen Aktualisierungsagenten) auf Server 4 und/oder Datenträgervorrichtung 1 erfolgen.

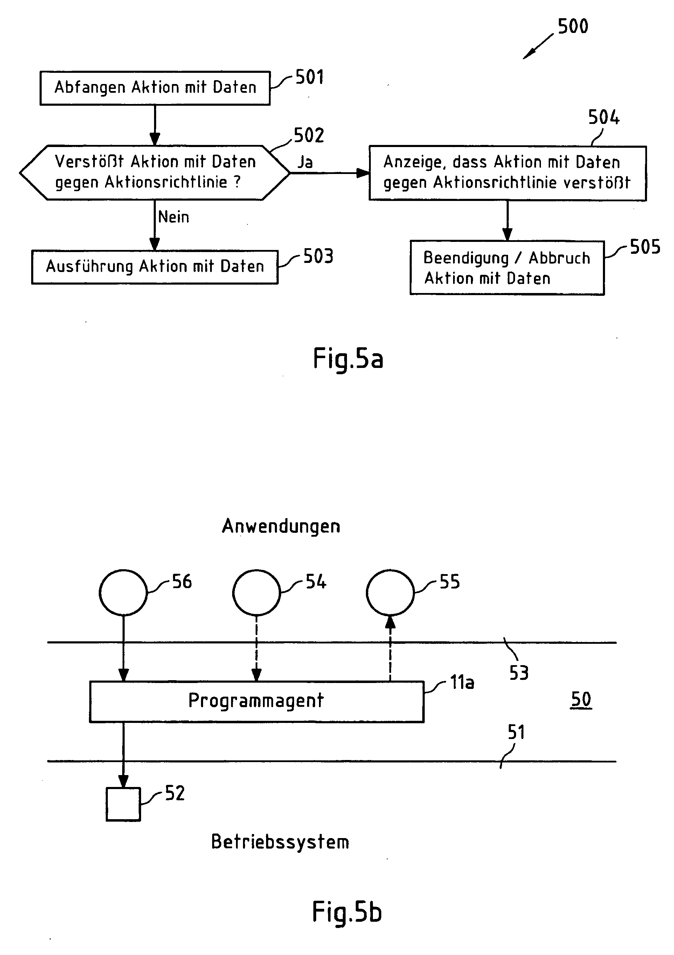

Fig. 5a zeigt ein Ablaufdiagramm 500 mit Verfahrensschritten einer beispielhaften Ausführungsform der Erfindung, die ablaufen, sobald eine Aktion mit Daten auf einer Datenverarbeitungsanlage ausgeführt werden soll, auf welcher der erfindungsgemäße Programmagent läuft. Die Datenverarbeitungsanlage könnte beispielsweise eine Heimat-Datenverarbeitungsanlage (z.B. Heimat-Datenverarbeitungsanlage 2a in Fig. 3) oder eine Gast-Datenverarbeitungsanlage (z.B. Gast-Datenverarbeitungsanlage 2e und 2d in Fig. 3) sein, die mit Datenträgervorrichtung 1 trennbar verbunden ist.

Die Schritte des Ablaufdiagramms 500 werden von dem Programmagenten 11a ausgeführt, insbesondere vom Programmagenten 11a, der auf einer Datenträgervorrichtung gemäß dem ersten Beispiel von Datenträgervorrichtung 1 enthalten ist, und vom Programmagenten 11a, der auf einer Datenträgervorrichtung gemäß der bevorzugten Ausführungsform von Datenträgervorrichtung 1 enthalten ist.

Im Folgenden wird davon ausgegangen, dass der Programmagent 11a auf der Datenverarbeitungsanlage 2 läuft, welche mit der Datenträgervorrichtung 1 verbunden wurde und auf welcher die Schritte gemäß Ablaufdiagramm 400 bereits abgelaufen sind oder welche eine Verbindung mit einer Datenträgervorrichtung 1 gemäß dem dritten Beispiel emuliert.

In Schritt 501 wird ein Aufruf einer Funktion, die eine Aktion mit Daten ausführt, abgefangen. Abfangen bedeutet in diesem Fall, dass der Aufruf der Funktion an den Programmagenten 11a umgeleitet wurde und die Aktion mit den Daten von der Funktion nicht ausgeführt wird.

Die Funktion kann eine der oben beschriebenen Funktionen von Programmierschnittstellen des Windows-Betriebssystems sein, es kann sich dabei aber auch um andere Funktionen handeln.

Insbesondere werden Aufrufe von Funktionen abgefangen, die folgende Aktionen mit Daten 12b ausführen:
- Daten-Kopieren und/oder -Bewegen: Um ein ungewünschtes Kopieren von mit dem Programmagenten 11a assoziierten Daten 12b und/oder von Daten auf die Datenträgervorrichtung zu verhindern, werden alle dementsprechende Aufrufe von Daten-Kopieren und Daten-Bewegen Funktionen abgefangen. Dies sind z.B. Aufrufe der CopyFile und MoveFile Funktionen der WINAPI des Windows-Betriebssystems. Dabei werden alle Aufrufe von dementsprechenden Funktionen, die von Programmen ausgehen, die auf der Datenverarbeitungsanlage 2 laufen, abgefangen.
- Daten-Drucken: Um ein ungewünschtes Drucken von mit dem Programmagenten 11a assoziierten Daten 12b zu verhindern, werden alle dementsprechenden Aufrufe von Daten-Drucken Funktionen abgefangen. Dies sind z.B. Aufrufe der StartDoc und StartDocPrinter Funktionen der WINAPI des Windows-Betriebssystems. Dabei werden alle Aufrufe von dementsprechenden Funktionen, die von Programmen ausgehen, die auf der Datenverarbeitungsanlage 2 laufen und z.B. auf einer Verwenderliste eingetragen sind, abgefangen. Auf der Verwenderliste sind Programme und/oder Prozesse eingetragen, die auf der Datenverarbeitungsanlage 2 laufen und Aktionen mit den mit dem Programmagenten 11a assoziierten Daten 12b ausführen.
- Daten-Speichern, -Speichern-Unter und/oder -Öffnen: Um ein ungewünschtes Öffnen, Anlegen, Editieren und/oder Speichern von mit dem Programmagenten 11a assoziierten Daten 12b zu verhindern, werden alle dementsprechenden Aufrufe von Daten-Speichern und/oder - Speichern-Unter Funktionen abgefangen. Dies sind z.B. Aufrufe der CreateFile Funktion der WINAPI des Windows-Betriebssystems. Dabei werden alle Aufrufe von dementsprechenden Funktionen, die von Programmen ausgehen, die auf der Datenverarbeitungsanlage 2 laufen, abgefangen.
- Daten-Transfer über Netzwerke: Um einen ungewünschten Transfer von mit dem Programmagenten 11a assoziierten Daten 12b über ein Netzwerk, z.B. das Internet und/oder jedes andere Netzwerk, zu verhindern, werden alle dementsprechenden Aufrufe von Daten-Transfer über Netzwerke Funktionen abgefangen. Dies sind z.B. Aufrufe der send und sendto Funktionen der Winsock-API des Windows-Betriebssystems. Dabei werden alle Aufrufe von dementsprechenden Funktionen, die von Programmen ausgehen, die auf der Datenverarbeitungsanlage 2 laufen, abgefangen.
- Daten-Austausch über Interprozesskommunikation: Um einen ungewünschten Austausch von mit dem Programmagenten 11a assoziierten Daten 12b zwischen Programmen, die auf der Verwenderliste eingetragen sind, und anderen Programmen, die auf der Datenverarbeitungsanlage 2 laufen, zu verhindern, werden alle dementsprechenden Aufrufe von Daten-Austausch über Interprozesskommunikation (engl. Inter-Process Communication, IPC) Funktionen abgefangen. Dies sind z.B. Aufrufe der GetClipboardData Funktion der WINAPI des Windows-Betriebssystems. Des Weiteren werden z.B. auch Aufrufe von Funktionen, die Programme auf der Verwenderliste eintragen, abgefangen. Dabei werden alle Aufrufe von dementsprechenden Funktionen, die von Programmen ausgehen, die auf der Datenverarbeitungsanlage 2 laufen, abgefangen.

In dem Aufruf werden der Funktion, die eine Aktion mit Daten 12b ausführt, die Daten als Argument übergeben. Ein solches Argument kann beispielsweise ein Referenzparameter wie ein Zeiger auf ein im Hauptspeicher 21 befindliches Speicherabbild und/oder ein Wertparameter sein.

In Schritt 502 wird der abgefangene Aufruf einer Funktion, die eine Aktion mit Daten ausführt, vom Programmagenten 11a dahingehend überprüft, ob die Aktion mit den Daten gegen eine Aktionsrichtlinie verstößt.

Dafür wird zunächst geprüft, ob die Aktion mit Daten ausgeführt werden soll, die mit dem Programmagenten 11a assoziiert sind.

Sind z.B. gemäß dem ersten Beispiel und der bevorzugten Ausführungsform der Datenträgervorrichtung 1 alle in Speicherbereich 12 enthaltenen Daten 12b mit dem Programmagenten 11a assoziiert. Enthält der abgefangene Aufruf als Argument z.B. einen Pfad, der auf Daten 12b in Speicherbereich 12 der Datenträgervorrichtung 1 verweist, so sind die als Argument enthaltene Daten sowohl gemäß dem ersten Beispiel als auch gemäß der bevorzugten Ausführungsform der Datenträgervorrichtung 1 mit dem Programmagenten 11a assoziiert. Dies ist z.B. durch den im Pfad enthaltenen Laufwerkbuchstaben feststellbar, wenn Speicherbereich 12 (d.h. die mit dem Programmagenten 11a assoziierten Daten) als neues (eigenständiges) Laufwerk in die Laufwerkstruktur der Datenverarbeitungsanlage 2 eingebunden wurden.

Außerdem könnte die Position der Speicherabbilder in Hauptspeicher 21 von mit dem Programmagenten 11a assoziierten Daten, die zu Prozessen von Programmen auf der Verwenderliste gehören, protokolliert und mit einem Argument des abgefangenen Aufrufs verglichen werden. Alternativ ist beispielsweise denkbar, dass abgefangene Aufrufe, die von Programmen ausgehen und/oder Programme aufrufen, die auf der Verwenderliste eingetragen sind, immer Daten betreffen, die mit dem Programmagenten 11a assoziiert sind. Dies ist z.B. im Fall des ersten Beispiels der Datenträgervorrichtung 1 vorteilhaft, um die auf der Verwenderliste eingetragenen Programme von Ausspähprogrammen (die möglicherweise auf der Datenverarbeitungsanlage laufen) zu isolieren.

Aktionen mit Daten, die nicht mit dem Programmagenten 11a assoziiert sind, verstoßen grundsätzlich nicht gegen die Aktionsrichtlinie und werden auch nicht dahingehend überprüft.

Gemäß dem ersten Beispiel der Datenträgervorrichtung 1 verstoßen alle Aktionen mit Daten 12b, die von Programmen aufgerufen oder ausgeführt werden, die nicht auf der weißen Liste eingetragen sind, gegen die Aktionsrichtlinie. Es ist allerdings denkbar, dass der Benutzer aufgefordert wird anzugeben, ob eine Aktion mit Daten 12b, die von einem Programm aufgerufen oder ausgeführt wird, das nicht auf der weißen Liste eingetragen ist, trotzdem zugelassen werden soll. Eine solche Benutzerangabe kann beispielsweise in der weißen Liste gespeichert werden.

Die Prüfung gemäß diesem ersten Beispiel kann deshalb durch einen Abgleich des Namens des aufrufenden oder des aufgerufenen Programm des abgefangenen Aufrufs mit den Programmnamen auf der weißen Liste ausgeführt werden.

Gemäß der bevorzugten Ausführungsform der Datenträgervorrichtung 1 prüft der Programmagent, ob die Aktion mit den Daten gegen die vorher bestimmte umgebungsabhängige Aktionsrichtlinie verstößt. Dies geschieht beispielsweise durch einen Abgleich der Aktion und der Daten mit einer Matrix wie der Vertrauensmatrix 4c in Fig. 4b.

Ergibt die Prüfung in Schritt 502, dass der abgefangene Aufruf der Funktion, die eine Aktion mit den Daten ausführt, gegen keine Aktionsrichtlinie verstößt, dann wird Schritt 503 ausgeführt.

In Schritt 503 wird der an den Programmagenten 11a umgeleitete Aufruf an die eigentliche Funktion weitergeleitet, so dass diese die Aktion mit den Daten ausführt. Gleichzeitig wird das Programm, von dem der Aufruf der Funktion ausging, in die Verwenderlist eingetragen, falls eine solche geführt wird.

Ergibt die Prüfung in Schritt 502, dass der abgefangene Aufruf der Funktion, die eine Aktion mit den Daten ausführt, gegen eine Aktionsrichtlinie verstößt, dann wird Schritt 504 ausgeführt.

In Schritt 504 wird dem Benutzer angezeigt, dass die Aktion mit den Daten gegen eine Aktionsrichtlinie verstößt, und in Schritt 505 wird der an den Programmagenten 11a umgeleitete Aufruf abgebrochen bzw. beendet. Ein Aufruf kann beispielsweise beendet werden, indem er nicht weitergeleitet wird.

An die Schritte 503 und 505 kann sich des Weiteren noch eine Protokollierung der Prüfung durch einen Protokollierungsagenten anschließen, falls dieser auf der Datenverarbeitungsanlage läuft.

Fig. 5b zeigt ein Software-Schichtmodell einer beispielhaften Ausführungsform der Datenverarbeitungsanlage 2, auf der der Programmagent 11a läuft. Die Datenverarbeitungsanlage könnte beispielsweise eine Heimat-Datenverarbeitungsanlage (z.B. Heimat-Datenverarbeitungsanlage 2a in Fig. 3) oder eine Gast-Datenverarbeitungsanlage (z.B. Gast-Datenverarbeitungsanlage 2e und 2d in Fig. 3) sein, die mit Datenträgervorrichtung 1 trennbar verbunden ist.

Das Software-Schichtmodell gilt für alle Datenverarbeitungsanlagen, auf denen Programmagent 11a läuft, insbesondere Datenverarbeitungsanlagen, auf denen Programmagent 11a, der auf einer Datenträgervorrichtung gemäß dem ersten Beispiel von Datenträgervorrichtung 1 enthalten ist, und/oder Programmagent 11a, der auf einer Datenträgervorrichtung gemäß der bevorzugten Ausführungsform von Datenträgervorrichtung 1 enthalten ist, läuft.

Das Softwareschichtmodell zeigt beispielhaft drei Software-Schichten, nämlich eine Zwischenschicht 50 mit dem Programmagenten 11a, eine untere Schicht 51 mit dem Betriebssystem und eine obere Schicht 53 mit Anwendungen.

Die untere Schicht 51 stellt den Anwendungen der oberen Schicht 53 allgemeine Funktionen, beispielsweise über Programmierschnittstellen, zur Verfügung. Eine solche Funktion 52 ist in Fig. 5b beispielhaft dargestellt.

Anwendungen der oberen Schicht 53 sind in Fig. 5b als Programme 54, 55 und 56, die auf der Datenverarbeitungsanlage laufen, gezeigt.

In Fig. 5b ist deutlich erkennbar, dass der Programmagent 11a sowohl einen Aufruf von Funktion 52 durch Programm 56 als auch einen Aufruf einer Funktion von Programm 55 durch Programm 54 bzw. einen Datenaustausch zwischen Programm 54 und 55 abfängt und erst nach erfolgreicher Prüfung zulässt.

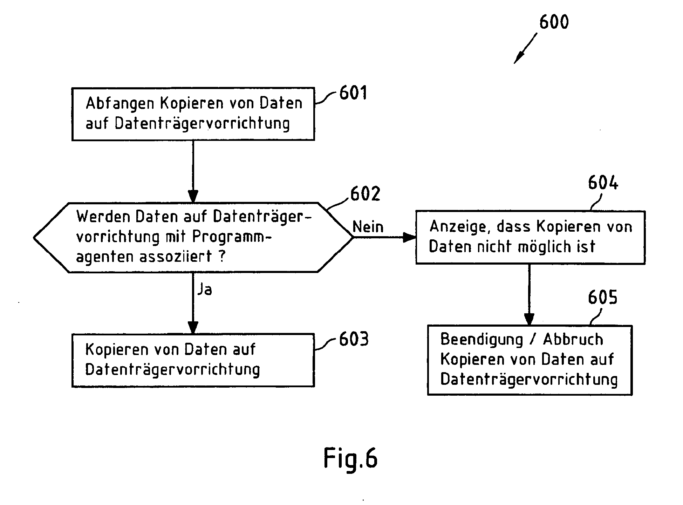

Fig. 6 zeigt ein Ablaufdiagramm 600 mit Verfahrensschritten einer beispielhaften Ausführungsform der Erfindung, die ablaufen, sobald Daten von Heimat-Datenverarbeitungsanlage 2a auf Datenträgervorrichtung 1a kopiert werden sollen.

Die Schritte des Ablaufdiagramms 600 werden von dem lokalen Programmagenten gemäß der oben erläuterten DLP-Lösung (umfassend Datenträgervorrichtungen gemäß der bevorzugten Ausführungsform der Datenträgervorrichtung 1) ausgeführt, der auf der Heimat-Datenverarbeitungsanlage installiert wurde und darauf läuft.

In Schritt 601 wird zunächst ein Aufruf einer Funktion einer Programmierschnittstelle zum Kopieren und/oder Bewegen von Daten abgefangen. Abfangen bedeutet in diesem Fall, dass der Aufruf der Funktion an den lokalen Programmagenten umgeleitet wird und das Kopieren und/oder Bewegen von Daten von der Funktion nicht ausgeführt wird.

Sollen die Daten nur auf einen lokalen mit der Datenverarbeitungsanlage fest verbundenen Datenträger, wie Programmspeicher 22, kopiert und/oder bewegt werden, dann wird der an den lokalen Programmagenten umgeleitete Aufruf unmittelbar an die aufgerufene Funktion weitergeleitet, die die Daten kopiert und/oder bewegt. Dafür wird z.B. der Laufwerkbuchstabe des Zielpfads überprüft.

Sollen die Daten jedoch auf die tragbare Datenträgervorrichtung 1a, die mit der Datenverarbeitungsanlage 2a trennbar verbundenen ist, kopiert werden, so wird in Schritt 602 geprüft, ob die Daten, wenn sie auf die Datenträgervorrichtung 1a kopiert wurden, mit dem Programmagenten 11a assoziiert werden. Dazu wird überprüft, ob die Datenträgervorrichtung 1a der bevorzugten Ausführungsform der Datenträgervorrichtung 1entspricht.

Entspricht Datenträgervorrichtung 1a der bevorzugten Ausführungsform der Datenträgervorrichtung 1, dann wird in Schritt 603 der an den lokalen Programmagenten umgeleitete Aufruf an die eigentliche Funktion weitergeleitet, so dass diese die Daten auf Datenträgervorrichtung 1a kopiert und/oder bewegt werden.

Entspricht Datenträgervorrichtung 1a jedoch nicht der bevorzugten Ausführungsform der Datenträgervorrichtung 1, und werden die Daten auch nicht auf andere Art und Weise mit dem Programmagenten 11a assoziiert, wenn sie auf Datenträgervorrichtung 1a kopiert wurden, dann wird Schritt 604 ausgeführt.

In Schritt 604 wird dem Benutzer angezeigt, dass das Kopieren und/oder Bewegen der Daten nicht möglich ist, und anschließend wird in Schritt 605 der an den lokalen Programmagenten umgeleitete Aufruf abgebrochen bzw. beendet.

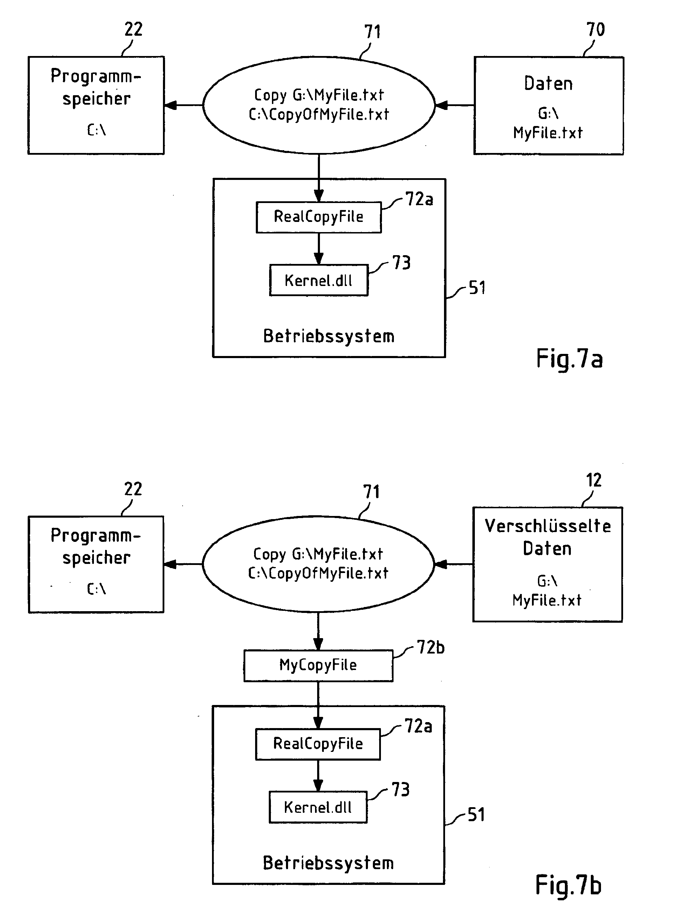

Fig. 7a zeigt eine schematische Darstellung des Kopierens von Daten von einer im Stand der Technik bekannten tragbaren Datenträgervorrichtung, die mit Datenverarbeitungsanlage 2 verbunden ist, in Programmspeicher 22 der Datenverarbeitungsanlage 2.

Speicher 70 der tragbaren Datenträgervorrichtung ist durch das Betriebssystem der Datenverarbeitungsanlage 2 als Laufwerk mit dem Pfad G:\ eingebunden worden. Programmspeicher 22 hat den Pfad C:\.

Durch den Befehl 71 ("Copy G:\Myfile.txt C:\CopyOfMyFile.txt") soll die Datei MyFile.txt von Speicher 70 in Programmspeicher 22 als CopyOfMyFile.txt kopiert werden. Der Befehl kann beispielsweise von einem Benutzer und/oder einem Programm eingegeben werden.

Befehl 71 ruft eine Funktion RealCopyFile 72a auf, die von einer Programmierschnittstelle der unteren Schicht 51 zur Verfügung gestellt wird und das Kopieren von Daten von einem Startpfad zu einem Zielpfad ausführt. Dabei ruft die Funktion RealCopyFile 72a weitere Funktionen, die vom Kern 73 des Betriebssystems zur Verfügung gestellt werden auf, so dass die Daten gemäß dem Befehl 71. kopiert werden.

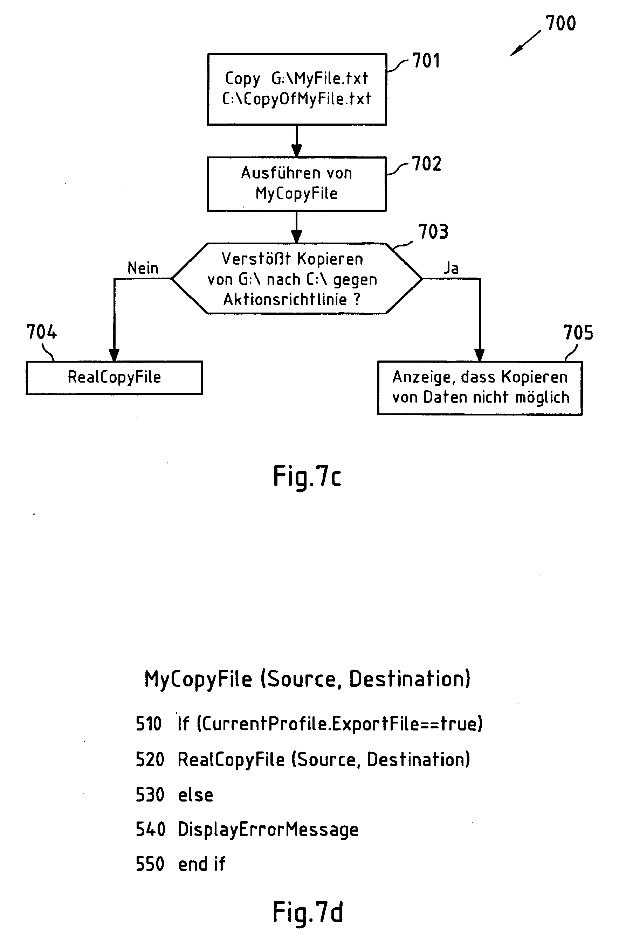

Fig. 7b zeigt eine schematische Darstellung des Kopierens von Daten 12b von dem ersten Beispiel oder der bevorzugten Ausführungsform der Datenträgervorrichtung 1, die mit Datenverarbeitungsanlage 2 verbunden ist, in Programmspeicher 22 der Datenverarbeitungsanlage 2; und in Fig. 7c ist das zu Fig. 7b korrespondierende Ablaufdiagramm 700 gezeigt.

Im Folgenden wird davon ausgegangen, dass der Programmagent 11 a auf Datenverarbeitungsanlage 2 läuft, welche mit dem ersten Beispiel oder der bevorzugten Ausführungsform der Datenträgervorrichtung 1 verbunden wurde und auf welcher die Schritte gemäß Ablaufdiagramm 400 bereits abgelaufen sind.

Speicherbereich 12 der Datenträgervorrichtung 1 ist durch das Betriebssystem der Datenverarbeitungsanlage 2 als Laufwerk mit dem Pfad G:\ eingebunden worden. Programmspeicher 22 hat den Pfad C:\.

In Schritt 701 soll durch den Befehl 71 ("Copy G:\Myfile.txt C:\CopyOfMyFile.txt") die Datei MyFile.txt von Speicherbereich 12 in Programmspeicher 22 als CopyOfMyFile.txt, wie in Fig. 7a, kopiert werden.

Befehl 71 ruft die Funktion RealCopyFile 72a auf, deren Aufruf jedoch in Schritt 702 auf die Funktion MyCopyFile 72b des Programmagenten 11a umgeleitet wird.

In Schritt 703 prüft die Funktion MyCopyFile 72b, ob das Kopieren der Datei MyFile.txt von Speicherbereich 12 in Programmspeicher 22 als CopyOfMyFile.txt gegen die Aktionsrichtlinie verstößt. Anhand des Startpfads ist erkennbar, dass die Datei MyFile.txt mit dem Programmagenten 11a assoziiert ist, also zu den verschlüsselten Daten 12b gehört.

Verstößt das Kopieren nicht gegen die Aktionsrichtlinie, wird in Schritt 704 der umgeleitete Aufruf, wie in Fig. 7b gezeigt, an die Funktion RealCopyFile 72a weitergeleitet, die die Daten gemäß dem Befehl 71 kopiert bzw. das Kopieren veranlasst.

Kein Verstoß gegen die Aktionsrichtlinie liegt zum Beispiel gemäß dem ersten Beispiel vor, wenn sowohl der Befehl 71 von einem Programm als auch die Programmierschnittstel-1e, die die Funktion RealCopyFile 72a zur Verfügung stellt, auf der weißen Liste eingetragen sind.

Im Fall der bevorzugten Ausführungsform liegt kein Verstoß gegen die Aktionsrichtlinie vor, wenn das Kopieren der Datei MyFile.txt gemäß der Vertrauensmatrix der bestimmten Aktionsrichtlinie zugelassen werden soll. Entspricht die Datei MyFile.txt beispielsweise der Datei 12b-1 in Vertrauensmatrix 4c und ist die mittlere Aktionsrichtlinie bestimmt, dann würde das Kopieren der Datei My-File.txt nicht gegen die Aktionsrichtlinie verstoßen.

Liegt dagegen ein Verstoß gegen die Aktionsrichtlinie vor, wird in Schritt 705 angezeigt, dass das Kopieren der Daten nicht möglich ist und der umgeleitete Aufruf wird nicht weiter behandelt.

Ein Verstoß gegen die Aktionsrichtlinie liegt zum Beispiel gemäß dem ersten Beispiel vor, wenn zumindest der Befehl 71 von einem Programm oder die Programmierschnittstel-1e, die die Funktion RealCopyFile 72a zur Verfügung stellt, nicht auf der weißen Liste eingetragen ist.

Im Fall der bevorzugten Ausführungsform liegt ein Verstoß gegen die Aktionsrichtlinie vor, wenn das Kopieren der Datei MyFile.txt gemäß der Vertrauensmatrix der bestimmten Aktionsrichtlinie unterbunden werden soll. Entspricht die Datei MyFile.txt beispielsweise der Datei 12b-8 in Vertrauensmatrix 4c und ist die mittlere Aktionsrichtlinie bestimmt, dann würde das Kopieren der Datei MyFile.txt gegen die Aktionsrichtlinie verstoßen.

Fig. 7d zeigt einen Pseudocode der Funktion MyCopyFile 72b des Programmagenten 11a.

Die Abfolge der einzelnen Verfahrenschritte in den einzelnen Ablaufdiagrammen ist nicht zwingend, alternative Abfolgen der Verfahrensschritte sind denkbar. Die Verfahrensschritte können auf verschiedenene Art und Weise implementiert werden, so ist eine Implementiereung in Software (durch Programmanweisungen), Hardware oder eine Kombination von beidem zur Implementierung der Verfahrensschritte denkbar.

## Patentansprüche

1. Verfahren, umfassend:
- Bestimmen einer Aktionsrichtlinie durch einen Programmagenten (11a) und/oder durch einen vom dem Programmagenten aufgerufenen Profilagenten, wenn ein elektronisches Gerät mit einer Datenverarbeitungsanlage trennbar verbunden wird, wobei der Programmagent (11a) auf dem elektronischen Gerät gespeichert ist und unmittelbar aus dem elektronischen Gerät (1, 1a, 1d, 1e) auf der Datenverarbeitungsanlage (2, 2a-e) ausgeführt wird,
wobei das Bestimmen der Aktionsrichtlinie (4) das Auswählen einer Aktionsrichtlinie (4) aus mehreren vorgegebenen Aktionsrichtlinien (4b, 4c, 4d) umfasst und zumindest teilweise auf einer Umgebung, in welcher der Programmagent läuft, basiert, und
wobei die Umgebung den Standort der Datenverarbeitungsanlage, deren Netzwerkverbindung und/oder die darauf installierten und/oder laufenden Anwendungen und/oder Prozesse umfasst,
- Prüfen durch den Programmagenten (11a), ob Aktionen (71) mit Daten (12b) gegen die bestimmte Aktionsrichtlinie verstoßen (502, 703), wobei die Aktionen (71) mit Daten (12b) Daten-Löschen, Daten-Lesen, Daten-Ändern, Daten-Kopieren, Daten-Drucken, Daten-Speichern, Daten-Transfer über Netzwerke, Daten-Transfer über ein virtuelles privates Netzwerk oder Daten-Austausch über Interprozesskommunikation umfassen, wobei der Programmagent (11a) mit den Daten (12b) assoziiert ist und die mit dem Programmagenten (11a) assoziierten Daten (12b) zusammen mit dem Programmagenten (11a) auf dem elektronischen Gerät (1, 1a, 1d, 1e) gespeichert sind, wobei die Daten (12b) auf dem elektronischen Gerät (1, 1a, 1d, 1e) durch den gemeinsamen Speicherort mit dem Programmagenten (11a) assoziiert sind,
- Zulassen (503, 704) der Aktionen durch den Programmagenten (11a), falls sie nicht gegen die bestimmte Aktionsrichtlinie (4) verstoßen, und Unterbinden (504-505, 705) der Aktionen durch den Programmagenten (11a), falls sie gegen die bestimmte Aktionsrichtlinie (4) verstoßen.

2. Verfahren gemäß Anspruch 1, wobei das Bestimmen der Aktionsrichtlinie (4) ferner umfasst das Vergleichen der Umgebung der Datenverarbeitungsanlage (2) mit mehreren vorgegebenen Umgebungsproflen, wobei jedem Umgebungsprofil eine der Aktionsrichtlinien zugeordnet ist, und wobei die Aktionsrichtlinie ausgewählt wird, die dem Umgebungsprofil mit der größten Übereinstimmung mit der Umgebung der Datenverarbeitungsanlage (2) zugeordnet ist.

3. Verfahren gemäß einem der Ansprüche 1-2, wobei die Aktionen (71) mit den Daten (12b) als Programm-, Prozedur- und/oder Schnittstellenaufruf, dem als Argument mit dem Programmagenten (11a) assoziierten Daten (12b) übergeben werden, und/oder Zugriffsversuche auf mit dem Programmagenten (11a) assoziierten Daten (12b) ausgebildet sind.

4. Verfahren gemäß einem der Ansprüche 1-3, wobei die mit dem Programmagenten (11a) assoziierten Daten (12b) in dem elektronischen Gerät (1, 1a, 1d, 1e) verschlüsselt gespeichert sind, insbesondere in der Form, dass die mit dem Programmagenten (11a) assoziierten Daten (12b) nur dann entschlüsselt werden, falls die Aktion (71) gegen keine Aktionsrichtlinie (4) verstößt.

5. Verfahren gemäß einem der Ansprüche 1-4, des Weiteren umfassend:
- Eintragen von Programmen (54-56), die auf der Datenverarbeitungsanlage (2, 2a-e) laufen und die mindestens eine Aktion mit den Daten (71) durchführen, in eine Verwenderliste und
- Beendigung aller auf der Datenverarbeitungsanlage (2, 2a-e) laufenden Programme (54-56), die auf der Verwenderliste eingetragen sind, vor Beendigung des Programmagenten (11a).

6. Computerprogramm (11a), umfassend Programmanweisungen, die einen Prozessor (20) zur Ausführung des Verfahrens gemäß einem der Ansprüche 1-5 veranlassen, wenn das Computerprogramm (11a) auf dem Prozessor (20) läuft.

7. Datenträgervorrichtung (1, 1a, 1d, 1e), auf der ein Computerprogramm (11a) gemäß Anspruch 6 gespeichert ist.

## Claims

1. Method comprising:
- determining an action guideline by a program agent (11a) and/or by a profile agent called up by the program agent when an electronic device is separably connected to a data processing arrangement, wherein the program agent (11a) is stored on the electronic device and is executed on the data
processing arrangement (2, 2a-e) directly from the electronic device (1, 1a, 1d, 1e),
wherein the determining of the action guideline (4) comprises selecting an action guideline (4) from a plurality of given action guidelines (4b, 4c, 4d) and is based at least in part on an environment in which the program agent is running, and
wherein the environment comprises the location of the data processing arrangement, the network connection thereof and/or the applications and/or processes installed and/or running thereon,
- checking by the program agent (11a) whether actions (71) with data (12b) go against (502, 703) the determined action guideline, wherein the actions (71) with data (12b) include deleting data, reading data, changing data, copying data, printing data, storing data, transferring data via networks, transferring data via a virtual private network or exchanging data via interprocess communication, wherein the program agent (11a) is associated with the data (12b) and the data (12b) associated with the program agent (11a) are stored on the electronic device (1, 1a, 1d, 1e) together with the program agent (11a), wherein the data (12b) on the electronic device (1, 1a, 1d, 1e) are associated with the program agent (11a) by means of the common storage location,
- allowing (503, 704), by the program agent (11a), the actions if they do not go against the determined action guideline (4), and preventing (504, 505, 705), by the program agent (11a), the actions if they do go against the determined action guideline (4).

2. Method according to claim 1, wherein the determining of the action guideline (4) further comprises comparing the environment of the data processing arrangement (2) with a plurality of given environment profiles, wherein each environment profile is assigned one of the action guidelines, and wherein the action guideline selected is the one which is assigned to the environment profile that most closely matches the environment of the data processing arrangement (2).

3. Method according to either claim 1 or claim 2, wherein the actions (71) with the data (12b) are configured as a program call, procedure call and/or interface call, to which call data (12b) associated with the program agent (11a) are transferred as an argument, and/or as attempts to access the data (12b) associated with the program agent (11a).

4. Method according to any of claims 1 to 3, wherein the data (12b) associated with the program agent (11a) are stored in an encrypted manner in the electronic device (1, 1a, 1d, 1e), in particular such that the data (12b) associated with the program agent (11a) are only decoded if the action (71) does not go against any of the action guideline (4).

5. Method according to any of claims 1 to 4, further comprising:
- entering into a user list programs (54-56) which are running on the data processing arrangement (2, 2a-e) and implement at least one action with the data (71) and
- terminating all the programs (54-56) which are running on the data processing arrangement (2, 2a-e) and have been entered on the user list prior to terminating the program agent (11a).

6. Computer program (11a), comprising program instructions that cause a processor (20) to carry out the method according to any of claims 1 to 5, when the computer program (11a) runs on the processor (20).

7. Data carrier apparatus (1, 1a, 1d, 1e) on which a computer program (11a) according to claim 6 is stored.

## Revendications

1. Procédé, comprenant :
- détermination d'une directive d'action grâce à un agent de programme (11a) et/ou grâce à un agent de profil appelé par l'agent de programme, lorsqu'un appareil électronique est relié de manière détachable à une installation de traitement de données, l'agent de programme (11a) étant mis en mémoire dans l'appareil électronique et étant directement exécuté à partir de l'appareil électronique (1, 1a, 1d, 1e) sur l'installation de traitement de données (2, 2a-e),
la détermination de la directive d'action (4) comprenant la sélection d'une directive d'action (4) parmi plusieurs directives d'action (4b, 4c, 4d) prescrites et reposant au moins partiellement sur un environnement dans lequel tourne l'agent de programme, et
l'environnement englobant le lieu d'implantation de l'installation de traitement de données, la connexion réseau de celle-ci et/ou les applications et/ou processus tournant sur celle-ci et/ou installé(e)s sur celle-ci,
- la vérification par l'agent de programme (11a) afin de savoir si des actions (71) avec des données (12b) violent la directive d'action (502, 703) déterminée, les actions (71) avec des données (12b) comprenant la suppression de données, la lecture de données, la modification de données, la copie de données, l'impression de données, le stockage de données, le transfert de données via des réseaux, le transfert de données via un réseau privé virtuel ou l'échange de données via une communication interprocessus, l'agent de programme (11a) étant associé aux données (12b) et les données (12b) associées à l'agent de programme (11a) étant enregistrées, ensemble avec l'agent de programme (11a), dans l'appareil électronique (1, 1a, 1d, 1e), les données (12b) dans l'appareil électronique (1, 1a, 1d, 1e) étant associées à l'agent de programme (11a) grâce au lieu de stockage commun,
- autorisation (503, 704) des actions par l'agent de programme (11a) si elles ne violent pas la directive d'action (4) déterminée, et interdiction (504-505, 705) des actions par l'agent de programme (11a) si elles violent la directive d'action (4) déterminée.

2. Procédé selon la revendication 1, dans lequel la détermination de la directive d'action (4) comprend en outre la comparaison de l'environnement de l'installation de traitement de données (2) avec plusieurs profils d'environnement prescrits, moyennant quoi l'on associe à chaque profil d'environnement l'une des directives d'action, et moyennant quoi l'on sélectionne la directive d'action qui est associée au profil d'environnement avec la plus grande concordance avec l'environnement de l'installation de traitement de données (2).

3. Procédé selon l'une des revendications 1 à 2, dans lequel les actions (71) avec les données (12b) sont réalisées en tant qu'appel de programme, de procédure et/ou d'interface, auquel des données (12b) associées à l'agent de programme (11a) sont remises en tant qu'argument, et/ou en tant que tentatives d'accès à des données (12b) associées à l'agent de programme (11a).

4. Procédé selon l'une des revendications 1-3, dans lequel les données (12b) associées à l'agent de programme (11a) sont enregistrées de manière cryptée dans l'appareil électronique (1, 1a, 1d, 1e), en particulier sous la forme faisant en sorte que les données (12b) associées à l'agent de programme (11a) sont seulement décryptées si l'action (71) ne viole aucune directive d'action (4).

5. Procédé selon l'une des revendications 1-4, comprenant par ailleurs :
- inscription de programmes (54-56), lesquels tournent sur l'installation de traitement de données (2, 2a-e) et exécutent au moins une action avec les données (71), dans une liste d'utilisateurs et
- achèvement de tous les programmes (54-56) tournant sur l'installation de traitement de données (2, 2a-e), lesquels sont inscrits sur la liste des utilisateurs, avant l'achèvement de l'agent de programme (11a).

6. Programme informatique (11a), comprenant des consignes de programme, lesquelles incitent un processeur (20) à exécuter le procédé selon l'une des revendications 1-5 lorsque le programme informatique (11a) tourne sur le processeur (20).

7. Dispositif de support de données (1, 1a, 1d, 1e) sur lequel est enregistré un programme informatique (11a) selon la revendication 6.
